# EUROPÄISCHE PATENTSCHRIFT

(11) **EP 3 608 482 B1**
(45) Veröffentlichungstag und Bekanntmachung des Hinweises auf die Patenterteilung: **17.02.2021**
(21) Anmeldenummer: 18187760.6
(22) Anmeldetag: 07.08.2018
(51) Int. Cl.: E04B 1/68, E06B 1/62

(54) **VERFAHREN ZUM HERSTELLEN EINER DICHTBANDROLLE**
METHOD FOR MANUFACTURING A SEALING STRIP ROLL
PROCÉDÉ DE FABRICATION D'UN ROULEAU DE RUBAN D'ÉTANCHÉITÉ

(43) Veröffentlichungstag der Anmeldung: 12.02.2020
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 428 632
- EP-A1- 2 990 551

## Beschreibung

Die vorliegende Erfindung betrifft ein Verfahren zum Herstellen einer Dichtbandrolle mit einer Mehrzahl innenliegender Sperrschichten, die sich zwischen einander gegenüberliegenden Stirnflächen der Dichtbandrolle erstreckt.

Von Dichtbandrollen abgewickelte Dichtbänder werden zum Abdichten von Fugen zwischen einem Rahmenprofil, zum Beispiel eines Fensters oder einer Tür, und einer Gebäudemauer verwendet, um die Fugen gegen Luftzug und Schlagregen abzudichten. Üblicherweise sind solche Dichtbänder zur platzsparenden Lagerung, zum Transport und zur besseren Handhabung während der Montage komprimiert zu Dichtbandrollen aufgewickelt. Neben der Luftdurchlässigkeit und der Schlagregendichtheit kommt dem Wasserdampfdiffusionswiderstand des Dichtbands als einer der wesentlichen Dichtbandeigenschaften besondere Bedeutung zu. Zusätzlich vorgesehene Sperrschichten auf einer Seitenflanke des Dichtbands oder parallel zu einer Seitenflanke des Dichtbands innerhalb desselben erhöhen die Dampfundurchlässigkeit des Dichtbands zwischen einer Rauminnenseite und einer Raumaußenseite. Eine solche Sperrschicht weist gegenüber dem Schaumstoff des Dichtbands einen erhöhten Wasserdampfdiffusionswiderstand auf und ist dadurch geeignet, die Wasserdampfdiffusion durch das Dichtband zu reduzieren.

Es hat sich herausgestellt, dass die Wasserdampfdurchlässigkeit eines Dichtbands über größere Längenabschnitte des Dichtbands hinweg zu betrachten ist. Lokale Unterschiede des Wasserdampfdiffusionswiderstands des Dichtbands, wie sie zum Beispiel schon aufgrund fertigungstechnischer Gegebenheiten auftreten können, führen zu einer Wasserdampfdiffusion innerhalb des Dichtbands hin zu Bereichen geringeren Wasserdampfdiffusionswiderstands. Um eine solche Wasserdampfdiffusion innerhalb des Dichtbands in Längsrichtung des Dichtbands zu reduzieren bzw. zu unterbinden, können Dichtbänder mit zusätzlichen Sperrschichten versehen sein, die sich im Wesentlichen parallel zur Funktionsrichtung des Dichtbands zwischen den der Rauminnenseite und der Raumaußenseite zugewandten Seitenflanken des Dichtbands und somit zwischen den Stirnflächen einer Dichtbandrolle erstrecken. Solche Sperrschichten unterteilen das Dichtband in eine Mehrzahl von in Längsrichtung des Dichtbands hintereinander angeordnete Dichtbandabschnitte, die jeweils durch eine Sperrschicht voneinander getrennt sind.

Die für Dichtbänder mit in Längsrichtung verlaufenden Sperrschichten bekannten Herstellverfahren eignen sich nicht oder nur sehr eingeschränkt zur Herstellung von Dichtbändern bzw. Dichtbandrollen mit einer Mehrzahl innenliegender Sperrschichten, die sich zwischen einander gegenüberliegenden Seitenflanken eines Dichtbands bzw. einander gegenüberliegenden Stirnflächen einer Dichtbandrolle erstecken.

Beispielsweise ist aus der EP 2 990 551 A1 ein Verfahren zur Herstellung von Dichtbandrollen mit einer innenliegenden Sperrschicht beschrieben, bei dem in eine Schaumstoffbahn eine Mehrzahl von in Längsrichtung der Schaumstoffbahn verlaufenden Schnitten eingebracht wird und in jedem durch diese Schnitte erzeugten Zwischenraum wiederum ein Sperrschichtmaterial eingefügt wird. Dabei ist es mitunter schwierig, das Sperrschichtmaterial in die sehr engen Zwischenräume zuverlässig einzubringen und sicherzustellen, dass das Material gleichmäßig über die gesamte Höhe der Schaumstoffbahn verteilt ist. Eine Kontrolle der eingebrachten Sperrschicht nach dem Einbringen des Sperrschichtmaterials ist nur schwer möglich.

Der vorliegenden Erfindung liegt daher die Aufgabe zugrunde, ein Verfahren zum Herstellen einer Dichtbandrolle mit einer Mehrzahl innenliegender Sperrschichten, die sich über mindestens 50 % der Breite der Dichtbandrolle zwischen einander gegenüberliegenden Stirnflächen der Dichtbandrolle erstreckt, bereitzustellen, das einfach und kostengünstig umsetzbar ist.

Diese Aufgabe wird durch die Merkmale der Ansprüche 1 bzw. 13 gelöst. Bevorzugte Ausführungsformen sind Gegenstand der abhängigen Unteransprüche.

Ein erfindungsgemäßes Verfahren zum Herstellen einer Dichtbandrolle mit einer Mehrzahl innenliegender Sperrschichten, von denen sich jede über mindestens 50 % der Breite der Dichtbandrolle zwischen einander gegenüberliegenden Stirnflächen der Dichtbandrolle erstreckt, umfasst in einer ersten Ausführungsform die folgenden Schritte:
a) Bereitstellen einer ersten Schaumstoffbahn aus weichem Schaumstoff mit einer Oberseite, einer Unterseite und zwei die Oberseite und die Unterseite verbindenden Seitenflanken, wobei eine Längsrichtung parallel zur Unterseite und parallel zu den Seitenflanken definiert ist und eine Querrichtung parallel zur Unterseite und senkrecht zur Längsrichtung definiert ist;
b) Aufbringen einer ersten Sperrschicht auf eine erste Fläche der ersten Schaumstoffbahn zur Bildung einer kaschierten Schaumstoffbahn, wobei die erste Fläche der Oberseite oder der Unterseite der ersten Schaumstoffbahn entspricht und eine zweite Fläche der jeweils anderen aus Oberseite und Unterseite der ersten Schaumstoffbahn entspricht;
c) Einbringen einer Mehrzahl von ersten Schnitten in eine Oberseite der kaschierten Schaumstoffbahn in Querrichtung und Einbringen einer Mehrzahl von zweiten Schnitten in eine Unterseite der kaschierten Schaumstoffbahn in Querrichtung und jeweils in Längsrichtung versetzt zu einem ersten Schnitt zur Bildung von in Längsrichtung hintereinander angeordneten Streifen, wobei zwischen zwei aneinander angrenzenden Streifen ein Verbindungsabschnitt verbleibt;
d) Umklappen der Streifen im Bereich der Verbindungsabschnitte zur Herstellung einer Schaumstoff-Sperrschicht-Bahn derart, dass sich Teilabschnitte der Oberseite der kaschierten Schaumstoffbahn, die an einen gemeinsamen Verbindungsabschnitt angrenzen, gegenüberliegen und sich Teilabschnitte der Unterseite der kaschierten Schaumstoffbahn, die an einen gemeinsamen Verbindungsabschnitt angrenzen, gegenüberliegen; und
e) Bilden einer Dichtbandrolle durch
   (i) Aufwickeln der Schaumstoff-Sperrschicht-Bahn um eine Drehachse zu einer Dichtbandrolle; oder
   (ii) Aufwickeln der Schaumstoff-Sperrschicht-Bahn um eine Drehachse zu einer Zwischenrolle und Durchtrennen der Zwischenrolle an einer oder an mehreren Stellen in einer axialen Richtung, um eine Mehrzahl von Dichtbandrollen zu erzeugen, die weniger breit sind als die Zwischenrolle; oder
   (iii) Einbringen mindestens eines Schnitts in die Schaumstoff-Sperrschicht-Bahn in Längsrichtung der Schaumstoff-Sperrschicht-Bahn zur Bildung von Schaumstoff-Sperrschicht-Streifen und Aufwickeln der Schaumstoff-Sperrschicht-Streifen um eine Drehachse zu einzelnen Dichtbandrollen.

Auf diese Weise ist es möglich, entsprechende Dichtbandrollen zuverlässig, einfach und kostengünstig herzustellen. Insbesondere kann die erste Sperrschicht großflächig auf eine Oberseite oder eine Unterseite der ersten Schaumstoffbahn aufgetragen werden. Die entsprechende Fläche der ersten Schaumstoffbahn ist im Herstellprozess gut zugänglich und einsehbar. Die aufgebrachte Sperrschicht kann vor den weiteren Verfahrensschritten hinsichtlich ihrer Qualität begutachtet werden, sodass bei mangelhafter Ausführung der Sperrschicht ein schnelles Eingreifen und Korrigieren des Prozesses möglich ist. Ein aufwendiges und schwer kontrollierbares Einbringen von Sperrschichtmaterial in Einschnitte eines Dichtbands oder einer Schaumstoffbahn oder das Vorbereiten einer Vielzahl von teilweise mit einem Sperrschichtmaterial versehenen Dichtbandabschnitte ist zur erfindungsgemäßen Herstellung der Dichtbandrolle nicht erforderlich. Nach dem Aufbringen der ersten Sperrschicht ist es lediglich erforderlich, die kaschierte Schaumstoffbahn abwechselnd an ihrer Oberseite und ihrer Unterseite einzuschneiden und die so gebildeten Streifen umzuklappen. Dadurch werden die durch die Einschnitte gebildeten Teilabschnitte der Sperrschicht automatisch im Inneren der Schaumstoff-Sperrschicht-Bahn angeordnet.

Ausgehend von der so gebildeten Schaumstoff-Sperrschicht-Bahn sind dem Fachmann ferner eine Reihe von Möglichkeiten gegeben, um aus dieser eine oder mehrere Dichtbahnrollen gewünschter Gestalt zu erzeugen. Zum einen kann die Schaumstoff-Sperrschicht-Bahn direkt zu einer Dichtbandrolle aufgewickelt werden (Variante i), wodurch weitere Schritte entfallen können. Die Schaumstoff-Sperrschicht-Bahn bildet bereits ein Dichtband. Durch das erfindungsgemäße Verfahren ist es besonders einfach möglich, Schaumstoff-Sperrschicht-Bahnen zu bilden, die wesentlich breiter sind als die herzustellenden Dichtbänder bzw. Dichtbandrollen. Aus einer solchen Schaumstoff-Sperrschicht-Bahn kann dann eine Vielzahl von Dichtbandrollen gewünschter Breite erzeugt werden. Das Herstellverfahren ist dann besonders effektiv. In einer Ausführungsform kann die Schaumstoff-Sperrschicht-Bahn zu einer Zwischenrolle aufgewickelt werden, die dann in eine Mehrzahl von Dichtbahnrollen durchtrennt wird (Variante ii). Die durch das Durchtrennen gebildeten Streifen bilden dann ein Dichtband. Das Durchtrennen der Zwischenrolle hat den Vorteil, dass durch das Durchtrennen der Zwischenrolle in einzelne Dichtbandrollen erzeugten Schnittflächen besonders eben ausfallen. Gemäß der Variante iii) kann die Schaumstoff-Sperrschicht-Bahn auch durch Einbringen mindestens eines Schnitts in eine Mehrzahl von Schaumstoff-Sperrschicht-Streifen getrennt werden, welche anschließend zu einzelnen Dichtbandrollen aufgewickelt werden. Die Schaumstoff-Sperrschicht-Streifen bilden dann jeweils ein Dichtband. Auch hierbei kann aus einer breiten Schaumstoff-Sperrschicht-Bahn effektiv eine Vielzahl von Dichtbandrollen erzeugt werden, wie zuvor beschrieben.

Die Dichtbahnrollen weisen ferner die Vorteile einer platzsparenden Lagerung, einer guten Transportierbarkeit und Handhabung von Dichtbändern auf. Das Dichtband, die Schaumstoff-Sperrschicht-Bahn bzw. die Schaumstoff-Sperrschicht-Streifen sind daher bevorzugt komprimiert zu Dichtbandrolle aufgewickelt. Die komprimierte Dicke eines Dichtbands in der erfindungsgemäß hergestellten Dichtbandrolle beträgt weniger als 25 % der Schaumstoffausgangshöhe. In bevorzugten Ausführungsformen weist das Dichtband eine komprimierte Dicke von weniger als 20 %, noch mehr bevorzugt von weniger als 15 % und/oder höher als 5 % der Schaumstoffausgangshöhe auf.

Das Dichtband weist vorzugsweise in einem expandierten Zustand einen im Wesentlichen rechteckigen Querschnitt auf. Eine Breite des Dichtbands ist zwischen den Seitenflanken des Dichtbands definiert, eine Höhe des Dichtbands ist zwischen der Oberseite und der Unterseite des Dichtbands definiert und eine Länge des Dichtbands ist in Längsrichtung definiert. Die Ober- und die Unterseite bilden im Querschnitt senkrecht zur Längsrichtung Breitseiten des Dichtbands und die Seitenflanken bilden in diesem Querschnitt Schmalseiten des Dichtbands. Es ist bevorzugt, dass sich das Dichtband wesentlich weiter in seiner Länge als in seiner Breite und seiner Höhe erstreckt. Vorzugsweise erstreckt sich die Drehachse, um die das Dichtband, die Schaumstoff-Sperrschicht-Streifen bzw. die Schaumstoff-Sperrschicht-Bahn zur Dichtbandrolle aufgewickelt werden, parallel zur Querrichtung. Die Seitenflanken des Dichtbands bilden dann Stirnflächen der Dichtbandrolle. Eine Breite der Dichtbandrolle entspricht dann im Wesentlichen der Breite des Dichtbands. Geringe Abweichungen können sich dadurch ergeben, dass sich die Seitenflanken im zur Dichtbandrolle aufgewickelten komprimierten Zustand geringfügig nach Außen wölben. Solche Abweichungen sollen bei der Angabe des Bereichs (in [%]), über den sich die Mehrzahl von Sperrschichten über die Breite des Dichtbands und der Dichtbandrolle erstreckt, nicht berücksichtigt werden. Erstreckt sich die Mehrzahl von Sperrschichten über die gesamte Breite der Dichtbandrolle, erstreckt sie sich auch über die gesamte Breite des Dichtbands und umgekehrt.

Ein Einbauzustand des Dichtbands ist als der Zustand definiert, in dem das Dichtband in einer Fuge zwischen einem Rahmenelement, z.B. einem Fenster- oder Türrahmen, und einer Gebäudemauer angeordnet ist. Dabei erstreckt sich die Längsrichtung des Dichtbands entlang der umlaufenden Fuge und das Dichtband liegt flächig mit der Unterseite und der Oberseite an dem Rahmenelement und an der Gebäudemauer an. Eine Seitenflanke des Dichtbands ist dann der Rauminnenseite und die gegenüberliegende Seitenflanke der Raumaußenseite zugewandt. Eine Funktionsrichtung des Dichtbands ist definiert als die Richtung, in der das Dichtband die Rauminnenseite gegenüber der Raumaußenseite im Bereich der Fuge dämmt und abdichtet. Die Funktionsrichtung erstreckt sich somit senkrecht zu den Seitenflanken des Dichtbands und parallel zur Unterseite des Dichtbands von der Rauminnenseite zur Raumaußenseite. Die Funktionsrichtung ist somit senkrecht zur Längsrichtung des Dichtbands ausgerichtet.

Das Dichtband weist ferner eine Mehrzahl von Dichtbandabschnitten auf, die in einem abgewickelten Zustand des Dichtbands in Längsrichtung hintereinander angeordnet sind, wobei zwischen jeweils zwei aneinander angrenzenden Dichtbandabschnitten der Mehrzahl von Dichtbandabschnitten eine Sperrschicht der Mehrzahl von Sperrschichten angeordnet ist. Die Dichtbandabschnitte werden durch die umgeklappten Streifen der Schaumstoff-Sperrschicht-Bahn gebildet, die unter Umständen zur Herstellung des Dichtbands durchtrennt werden (Varianten ii) und iii)). Die Mehrzahl von Sperrschichten erstreckt sich über mindestens 50 % der Breite der Dichtbandrolle zwischen den einander gegenüberliegenden Stirnflächen der Dichtbandrolle. Die in Längsrichtung des Dichtbands hintereinander angeordneten Sperrschichten beeinflussen somit eine Wasserdampfdiffusion und/oder Luftdurchlässigkeit innerhalb des Dichtbands in Längsrichtung desselben zwischen den einzelnen Dichtbandabschnitten. Inhomogenitäten des Schaumstoffmaterials des Dichtbands wirken sich somit allenfalls lokal aus. Eine Wasserdampfdiffusion innerhalb des Dichtbands in Längsrichtung des Dichtbands kann zumindest weitgehend unterbunden werden.

Um diesen Effekt zu verstärken, erstreckt sich die Mehrzahl von Sperrschichten über mindestens 50 %, mehr bevorzugt über mindestens 75 %, noch mehr bevorzugt über mindestens 90 % der Breite der Dichtbandrolle zwischen den einander gegenüberliegenden Stirnflächen der Dichtbandrolle. In der bevorzugten Ausführungsform erstreckt sich die Mehrzahl von Sperrschichten durchgehend von einer Stirnfläche der Dichtbandrolle zur gegenüberliegenden Stirnfläche der Dichtbandrolle. Weiterhin erstreckt sich die Mehrzahl von Sperrschichten über mindestens 50 %, mehr bevorzugt über mindestens 75 %, noch mehr bevorzugt über mindestens 90 % der Höhe des Dichtbands im expandierten Zustand zwischen dessen Oberseite und dessen Unterseite. Je größer der Bereich ist, über den sich die Mehrzahl von Sperrschichten zwischen den Stirnflächen der Dichtbandrolle und somit zwischen den Seitenflanken des Dichtbands erstreckt, desto vollständiger werden die in Längsrichtung hintereinander angeordneten Dichtbandabschnitte voneinander getrennt. Eine Wasserdampfdiffusion innerhalb des Dichtbands in Längsrichtung kann dadurch zunehmend verringert werden. Insbesondere wird verhindert, dass eine Wasserdampfdiffusion um die Mehrzahl von Sperrschichten herum erfolgt. Die Mehrzahl von Sperrschichten kann sich ausgehend von einer Stirnfläche der Dichtbandrolle in Richtung der gegenüberliegenden Stirnfläche erstrecken. Die Mehrzahl von Sperrschichten kann sich aber auch derart zwischen den Stirnflächen der Dichtbandrolle erstrecken, dass seitliche, den Stirnflächen zugewandte Ränder der Sperrschichten beabstandet zu den Stirnflächen angeordnet sind.

Besonders bevorzugt sind die hierin beschriebenen Sperrschichten aus einem folienartigen Material oder einem Klebstoff, insbesondere aus einem Folienstreifen, einem Klebebandstreifen oder einem klebstoffartigen flüssigen Medium gebildet. Solche Sperrschichtmaterialien lassen sich besonders einfach und gut kontrollierbar auf den Schaumstoff des Dichtbands aufbringen und mit diesem verbinden. Zudem eignen sich diese Materialien besonders gut als Sperrschichtmaterial, da sich ihre Dichteigenschaften gezielt einstellen lassen.

Beispielsweise sind die hierin beschriebenen Sperrschichten aus einem folienartigen Material, z.B. einer Folie aus Polyamid, Polyurethan, Polypropylen, oder Copolymeren davon gebildet. Die hierin beschriebenen Sperrschichten können auch aus einem Klebstoff, z.B. einem Dispersionsklebstoff, insbesondere einem Acrylatklebstoff gebildet sein. Die Sperrschichten können alle aus demselben Material oder aus unterschiedlichen Materialien gebildet sein.

Die Sperrschichten können auch feuchtevariabel ausgebildet sein, d.h. ihr Wasserdampfdiffusionswiderstand ändert sich in Abhängigkeit von der Luftfeuchtigkeit der Umgebung der Sperrschicht. Kennzeichnend für den Wasserdampfdiffusionswiderstand ist der Wasserdampfdiffusionswert bezogen auf eine Luftschichtdicke in Metern, der sogenannte sD-Wert.

In einer Ausführungsform umfasst das Dichtband bzw. die Dichtbandrolle weiterhin ein Zusatzmaterial, das auf eine Fläche des Dichtbands oder auf die Mehrzahl von Sperrschichten aufgebracht ist oder im Imprägnat enthalten ist. Das Zusatzmaterial kann dem Dichtband spezielle Eigenschaften verleihen. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

Der Schaumstoff der Schaumstoffbahnen kann aus jedem beliebigen offenzelligen oder geschlossenzelligen Weichschaumstoff gebildet sein, zum Beispiel aus Polyurethan, Polyethylen, Polyvinylchlorid oder Polypropylen, und kann für eine verzögerte Rückstellung nach Kompression imprägniert sein. Das Raumgewicht derartiger Weichschaumstoffe liegt zwischen 20 und 200 kg/m³.

Vorzugsweise umfasst Schritt b) des erfindungsgemäßen Verfahrens weiterhin das Aufbringen einer zweiten Sperrschicht auf die zweite Fläche der ersten Schaumstoffbahn. Dadurch werden durch Umklappen der Streifen im Bereich der Verbindungsabschnitte sowohl Teilabschnitte der ersten Sperrschicht als auch Teilabschnitte der zweiten Sperrschicht im Inneren der Schaumstoff-Sperrschicht-Bahn angeordnet. Auf diese Weise können ohne Mehraufwand in den nachfolgenden Schritten entweder Dichtbandrollen mit einer größeren Anzahl innenliegender Sperrschichten erzeugt werden und/oder es kann eine größere Anzahl von Dichtbandrollen aus der Schaumstoff-Sperrschicht-Bahn hergestellt werden. Die zweite Sperrschicht kann aus demselben Material wie die erste Sperrschicht gebildet sein. Die zweite Sperrschicht kann aber auch ein von der ersten Sperrschicht verschiedenes Material aufweisen, um die Eigenschaften der herzustellenden Dichtbänder weiter zu variieren bzw. einzustellen.

Es ist bevorzugt, dass der Schritt a) weiterhin das Bereitstellen mindestens einer weiteren Schaumstoffbahn aus weichem Schaumstoff umfasst und Schritt b) zum Bilden einer kaschierten Schaumstoffbahn aus mehreren Lagen weiterhin umfasst:
- Anordnen der mindestens einen weiteren Schaumstoffbahn derart, dass sich jeweils eine zweite Fläche und eine erste Fläche zweier aneinander angrenzender Schaumstoffbahnen gegenüberliegen; und
- Anordnen mindestens einer Sperrschicht zwischen zwei aneinander angrenzenden Schaumstoffbahnen.

Auf diese Weise werden kaschierte Schaumstoffbahnen gebildet, die aus mehreren abwechselnd übereinander angeordneten Schaumstoffbahnen und Sperrschichten bestehen. Besonders bevorzugt ist es dabei, wenn eine erste Sperrschicht auf die Oberseite einer ersten Schaumstoffbahn aufgebracht wird, eine zweite Schaumstoffbahn zugeführt und derart angeordnet wird, dass ihre Unterseite an die mit der ersten Sperrschicht versehene Oberseite der ersten Schaumstoffbahn angrenzt, eine weitere Sperrschicht auf die Oberseite der zweiten Schaumstoffbahn aufgebracht wird, und eine dritte Schaumstoffbahn zugeführt und derart angeordnet wird, dass eine Unterseite der dritten Schaumstoffbahn an die mit der weiteren Sperrschicht versehene Oberseite der zweiten Schaumstoffbahn angrenzt. Auf diese Weise kann für beliebig viele Schaumstoffbahnen und Sperrschichten weiter verfahren werden, um eine kaschierte Schaumstoffbahn beliebigen Ausmaßes zu erzeugen, in der abwechselnd eine Schaumstoffbahn und eine Sperrschicht übereinander angeordnet sind.

Werden erste und zweite Einschnitte gemäß Schritt c) des erfindungsgemäßen Verfahrens in eine mehrlagige kaschierte Schaumstoffbahn eingebracht, umfassen die dadurch gebildeten Streifen eine Mehrzahl von übereinander angeordneten Schaumstoffstreifen und Sperrschichtstreifen. Werden die Streifen dann gemäß Schritt d) umgeklappt, bilden sie Dichtbandabschnitte, die neben den im Bereich der Verbindungsabschnitte angeordneten Teilabschnitten der ersten und, falls vorhanden, der zweiten Sperrschicht noch weitere Sperrschichtabschnitte umfassen. Die Anzahl an innenliegenden Sperrschichten kann dadurch weiter erhöht werden, ohne dass sich die Komplexität des Verfahrens wesentlich erhöht. Das Verfahren wird dadurch effektiver gestaltet.

Vorzugsweise umfasst das Verfahren weiterhin das Verbinden der ersten Schaumstoffbahn mit der mindestens einen weiteren Schaumstoffbahn an den einander zugewandten ersten und zweiten Flächen. Mehr bevorzugt werden auch bei einer mehrlagigen kaschierten Schaumstoffbahn beliebigen Ausmaßes jeweils die aneinander angrenzenden Schaumstoffbahnen im Bereich der einander zugewandten ersten und zweiten Flächen miteinander verbunden. Dabei können die Schaumstoffbahnen mittels zusätzlicher Verbindungsmittel, wie z. B. Klebstoff oder Klebebändern oder Ähnlichem verbunden werden, die auf zumindest eine der einander zugewandten ersten und zweiten Flächen aneinander angrenzender Schaumstoffbahnen aufgebracht werden. Es kann aber z. B. auch eine Klebeschicht auf die Seitenflanken der Schaumstoffbahnen aufgebracht werden, sodass die aneinander angrenzenden Schaumstoffbahnen über ihre Seitenflanken miteinander verbunden sind. Ferner ist es möglich, dass aneinander angrenzende Schaumstoffbahnen mittels der zwischen ihnen angeordneten Sperrschicht verbunden werden. Hierzu kann die Sperrschicht entweder selbst eine gewisse Klebewirkung aufweisen, einseitig oder beidseitig mit einem Klebstoff versehen sein, oder durch Wärmeeinwirkung angeschmolzen werden, sodass sie eine Verbindung mit den Schaumstoffbahnen eingeht. Bevorzugt wird zusätzlich Druck auf die zu verbindenden Flächen ausgeübt. Durch das Verbinden aneinander angrenzender Schaumstoffbahnen wird der Zusammenhalt der mehrlagigen kaschierten Schaumstoffbahn sowie, nach dem Umklappen der gebildeten Streifen, der Zusammenhalt der Schaumstoff-Sperrschicht-Bahn bzw. der erzeugten Dichtbänder erhöht. Dies ist zudem auch vorteilhaft für die weitere Handhabung der jeweiligen Komponenten in den weiteren Verfahrensschritten.

Gemäß einer bevorzugten Ausführungsform umfasst das Verfahren weiterhin das Aufbringen einer Sperrschicht auf zumindest eine von den übrigen Schaumstoffbahnen abgewandte erste oder zweite Fläche einer außenliegenden Schaumstoffbahn. D. h., dass auch bei einer mehrlagigen kaschierten Schaumstoffbahn zumindest eine Sperrschicht auf der Oberseite oder der Unterseite dieser mehrlagigen kaschierten Schaumstoffbahn aufgebracht ist. Bevorzugt ist sowohl auf der Oberseite als auch auf der Unterseite der kaschierten Schaumstoffbahn eine Sperrschicht aufgebracht. Diese bilden dann jeweils einen Verbindungsabschnitt zwischen zwei aneinander angrenzenden Streifen. Zudem wird die Anzahl innenliegender Sperrschichtabschnitte dadurch weiter erhöht.

Vorzugsweise werden in Längsrichtung betrachtet abwechselnd ein erster Schnitt und ein zweiter Schnitt in die kaschierte Schaumstoffbahn eingebracht. Besonders bevorzugt werden die Mehrzahl von ersten Schnitten und die Mehrzahl von zweiten Schnitten in einer Längsrichtung der kaschierten Schaumstoffbahn in gleichmäßigen Abständen zueinander eingebracht, um Streifen gleicher Breite zu erzeugen. Zum einen wird es dadurch möglich, eine im Wesentlichen ebene Schaumstoff-Sperrschicht-Bahn zu erzeugen, die sich für die weitere Verarbeitung eignet. Zum anderen werden die zu erzeugenden Dichtbänder möglichst homogen bezüglich ihrer Dämm- und Dichteigenschaften ausgebildet, wenn die einzelnen durch die Streifen gebildeten Dichtbandabschnitte im Wesentlichen dieselben Dimensionen aufweisen.

Indem die ersten und zweiten Schnitte unterschiedlich tief eingebracht werden, kann die Gestalt der Dichtbänder bzw. Schaumstoff-Sperrschicht-Bahn weiter variiert werden. Dabei ist insbesondere zu unterscheiden, ob ein Schnitt alle Schaumstoffbahnen vollständig durchtrennt und ein Verbindungsabschnitt zwischen zwei aneinander angrenzenden Streifen dann lediglich aus einer auf der angrenzenden ersten oder zweiten Fläche angeordneten Sperrschicht gebildet ist, oder ob ein Schnitt die Schaumstoffbahnen nicht vollständig durchtrennt, sodass der Verbindungsabschnitt zusätzlich einen Schaumstoffsteg umfasst.

Werden die Verbindungsabschnitte nur durch die erste Sperrschicht und die zweite Sperrschicht gebildet, bilden diese im Bereich der Verbindungsabschnitte eine Art Scharnierverbindung, die die beiden angrenzenden Streifen gelenkig miteinander verbindet. Auch ein Schaumstoffsteg zwischen den aneinander angrenzenden Streifen bildet eine solche Scharnierverbindung. Es ist jedoch zu berücksichtigen, dass mit zunehmender Höher des Schaumstoffstegs das nachfolgende Umklappen der Streifen im Beriech der Verbindungsabschnitte, erschwert wird. Ein Schaumstoffsteg setzt in Abhängigkeit seiner Höhe dem Umklappen der Streifen einen Widerstand entgegen. Falls solche Schaumstoffstege vorgesehen sind, sind diese dünner, als die verwendeten Schaumstoffbahnen auszubilden. Vorzugsweise weisen die Schaumstoffstege eine Höhe von maximal 10 mm, mehr bevorzugt von maximal 5 mm und nicht mehr bevorzugt von maximal von 1 mm bis 2 mm auf. Vorteilhaft sind die Schaumstoffstege jedoch dahingehend, dass sie die erste Sperrschicht und/oder die zweite Sperrschicht beim Einbringen der Mehrzahl von ersten und zweiten Schnitten vor Beschädigungen schützen und einen erhöhten Zusammenhalt der Streifen in Längsrichtung gewährleisten.

Grundsätzlich sind dabei verschiedene Kombinationsmöglichkeiten der Einschnitttiefe der ersten und der zweiten Schnitte denkbar, von denen bevorzugte Ausführungsformen im Folgenden dargestellt sind.

In einer Ausführungsform durchtrennt die Mehrzahl von ersten Schnitten die erste Schaumstoffbahn vollständig, sodass die Mehrzahl von Verbindungsabschnitten im Bereich der zweiten Fläche alleine durch die zweite Sperrschicht gebildet wird. Die Mehrzahl von zweiten Schnitten durchtrennt die erste Schaumstoffbahn nicht vollständig, sodass die Mehrzahl von Verbindungsabschnitten im Bereich der ersten Fläche einen Schaumstoffsteg umfasst.

In einer anderen Ausführungsform durchtrennt die Mehrzahl von ersten Schnitten die erste Schaumstoffbahn nicht vollständig, sodass die Mehrzahl von Verbindungsabschnitten im Bereich der zweiten Fläche einen Schaumstoffsteg umfasst. Die Mehrzahl von zweiten Schnitten durchtrennt die erste Schaumstoffbahn vollständig, sodass die Mehrzahl von Verbindungsabschnitten im Bereich der ersten Fläche alleine durch die erste Sperrschicht gebildet wird.

In noch einer anderen Ausführungsform durchtrennen die Mehrzahl von ersten Schnitten und die Mehrzahl von zweiten Schnitten die erste Schaumstoffbahn nicht vollständig, sodass die Mehrzahl von Verbindungsabschnitten im Bereich der ersten Fläche einen Schaumstoffsteg umfasst und die Mehrzahl von Verbindungsabschnitten im Bereich der zweiten Fläche einen Schaumstoffsteg umfasst.

Alternativ durchtrennen die Mehrzahl von ersten Schnitten und die Mehrzahl von zweiten Schnitten die erste Schaumstoffbahn jeweils vollständig, sodass die Mehrzahl von Verbindungsabschnitten im Bereich der ersten Fläche alleine durch die erste Sperrschicht gebildet wird und die Mehrzahl von Verbindungsabschnitten im Bereich der zweiten Fläche alleine durch die zweite Sperrschicht gebildet wird.

Die zuvor dargestellten Möglichkeiten der Einschnitttiefe der Mehrzahl von ersten und zweiten Schnitten bezieht sich auf das Ausführungsbeispiel, in dem die kaschierte Schaumstoffbahn nur die erste Schaumstoffbahn umfasst. Es versteht sich, dass die Ausführungsbeispiele analog auf eine mehrlagige kaschierte Schaumstoffbahn anwendbar sind. Die Verbindungsabschnitte werden in diesem Fall im Bereich einer Oberseite und einer Unterseite der mehrlagigen kaschierten Schaumstoffbahn gebildet. Dementsprechend umfassen die Verbindungsabschnitte optional einen Sperrschichtabschnitt der jeweils auf der Oberseite und/oder der Unterseite der kaschierten Schaumstoffbahn aufgebrachten Sperrschicht und optional einen Schaumstoffsteg, der jeweils in der obersten oder untersten Schaumstoffbahn der mehrlagigen kaschierten Schaumstoffbahn ausgebildet ist.

Vorzugsweise umfasst das Verfahren das Verbinden der mit einer Sperrschicht versehenen und einander jeweils gegenüberliegenden Teilabschnitte der ersten bzw. der zweiten Fläche der Streifen nach dem Umklappen. Durch das Verbinden der Streifen nach dem Umklappen wird zusätzlich zu der durch die Verbindungsabschnitte hergestellten Verbindung der Zusammenhalt der Streifen erhöht. Sowohl die erzeugte Schaumstoff-Sperrschicht-Bahn als auch die nachfolgend hergestellten Dichtbänder und Dichtbandrollen werden somit stabiler ausgebildet.

In einer zweiten Ausführungsform umfasst das erfindungsgemäße Verfahren zum Herstellen einer Dichtbandrolle mit einer Mehrzahl innenliegender Sperrschichten, von denen sich jede über mindestens 50 % der Breite der Dichtbandrolle zwischen einander gegenüberliegenden Stirnflächen der Dichtbandrolle erstreckt, die folgenden Schritte:
a) Bereitstellen einer ersten Schaumstoffbahn aus weichem Schaumstoff mit einer Oberseite, einer Unterseite und zwei die Oberseite und die Unterseite verbindenden Seitenflanken, wobei eine Längsrichtung parallel zur Unterseite und parallel zu den Seitenflanken definiert ist und eine Querrichtung parallel zur Unterseite und senkrecht zur Längsrichtung definiert ist;
b) Aufbringen einer ersten Sperrschicht auf eine erste Fläche der ersten Schaumstoffbahn zur Bildung einer kaschierten Schaumstoffbahn, wobei die erste Fläche der Oberseite oder Unterseite der ersten Schaumstoffbahn entspricht und eine zweite Fläche der jeweils anderen aus Oberseite und Unterseite der ersten Schaumstoffbahn entspricht;
c) Einbringen einer Mehrzahl von Schnitten, die die kaschierte Schaumstoffbahn vollständig durchtrennen, in die kaschierte Schaumstoffbahn in Querrichtung zur Bildung von in Längsrichtung hintereinander angeordneten Streifen;
d) Umklappen jedes Streifens um eine Kippachse zur Herstellung einer Schaumstoff-Sperrschicht-Bahn derart, dass Teilabschnitte der Oberseite der kaschierten Schaumstoffbahn und Teilabschnitte der Unterseite der kaschierten Schaumstoffbahn im Inneren der Schaumstoff-Sperrschicht-Bahn angeordnet sind, wobei sich die Kippachse in Querrichtung erstreckt;
e) Bilden einer Dichtbandrolle durch
   (i) Aufwickeln der Schaumstoff-Sperrschicht-Bahn um eine Drehachse zu einer Dichtbandrolle; oder
   (ii) Aufwickeln der Schaumstoff-Sperrschicht-Bahn um eine Drehachse zu einer Zwischenrolle und Durchtrennen der Zwischenrolle an einer oder an mehreren Stellen in einer axialen Richtung, um eine Mehrzahl von Dichtbandrollen zu erzeugen, die weniger breit sind als die Zwischenrolle; oder
   (iii) Einbringen mindestens eines Schnitts in die Schaumstoff-Sperrschicht-Bahn in einer Längsrichtung der Schaumstoff-Sperrschicht-Bahn zur Bildung von Schaumstoff-Sperrschicht-Streifen und Aufwickeln der Schaumstoff-Sperrschicht-Streifen um eine Drehachse zu einzelnen Dichtbandrollen.

Das Verfahren gemäß dieser zweiten Ausführungsform unterscheidet sich von der ersten Ausführungsform im Wesentlichen dadurch, dass die eingebrachten Schnitte die kaschierte Schaumstoffbahn vollständig durchtrennen. Die so gebildeten Streifen sind folglich nicht durch einen Verbindungsabschnitt miteinander verbunden, wie dies bei der ersten Ausführungsform der Fall ist. Dies hat insbesondere den Vorteil, dass beim Einbringen der Schnitte weniger präzise gearbeitet werden muss, da kein sehr dünner Schaumstoffsteg zu bilden ist, dessen Dicke durch geringste Variation der Einschnitttiefe beträchtlich verändert werden kann und da auch keine Gefahr besteht, die im Bereich eines Verbindungsabschnitts angeordnete Sperrschicht ungewollt zu beschädigen. Das Verfahren ist daher einfacher, zuverlässiger und schneller durchzuführen.

Vorzugsweise umfasst Schritt b) auch hier weiterhin das Aufbringen einer zweiten Sperrschicht auf die zweite Fläche der ersten Schaumstoffbahn, wobei die Mehrzahl von Schnitten auch die zweite Sperrschicht vollständig durchtrennt.

Schließlich ist es bevorzugt, dass das Verfahren das Verbinden der aneinander angrenzenden Streifen der Schaumstoff-Sperrschicht-Bahn zwischen Schritt d) und e) umfasst. Dadurch wird der Zusammenhalt der Streifen in Längsrichtung der Schaumstoff-Sperrschicht-Bahn hergestellt. Bevorzugt erfolgt das Verbinden der Streifen mittels der Sperrschichtabschnitte, die zwischen den Streifen angeordnet sind, wie bezüglich der ersten Ausführungsform beschrieben ist. Insbesondere umfasst das Verbinden der Streifen das Erwärmen der Streifen vor oder nach dem Umklappen. Das Verbinden der aneinander angrenzenden Streifen kann beispielsweise auch durch Aufbringen einer Klebeschicht auf die Oberseite und/oder Unterseite der Schaumstoff-Sperrschicht-Bahn erfolgen. Das Verbinden kann aber auch das Aufbringen einer Klebeschicht auf die Seitenflanken der Schaumstoff-Sperrschicht-Bahn umfassen. Umfasst das Verbinden der aneinander angrenzenden Streifen das Aufbringen einer Klebeschicht auf die Seitenflanken der Schaumstoff-Sperrschicht-Bahn, ist es weiterhin bevorzugt, dass diese Klebeschicht zugleich eine Sperrschicht bildet. Eine solche Sperrschicht ist dann in Längsrichtung ausgerichtet und bildet vorzugsweise eine Stirnfläche der herzustellenden Dichtbandrolle.

Weitere Merkmale und Vorteile der vorliegenden Erfindung ergeben sich aus der nachfolgenden Beschreibung unter Bezugnahme auf die Zeichnungen.
- Fig. 1: zeigt in einer isometrischen Ansicht eine bevorzugte Ausführungsform einer Dichtbandrolle, die gemäß des erfindungsgemäßen Verfahrens hergestellt wurde;
- Fig. 2: zeigt beispielhaft den Schritt des Aufbringens einer ersten Sperrschicht auf eine erste Fläche der ersten Schaumstoffbahn;
- Fig. 3: zeigt beispielhaft den Schritt des Umklappens der Streifen zur Bildung einer Schaumstoff-Sperrschicht-Bahn gemäß einer ersten Ausführungsform des erfindungsgemäßen Verfahrens;
- Fig. 4: zeigt eine schematische Querschnittsansicht einer durch Umklappen gemäß Fig. 3 erzeugten Schaumstoff-Sperrschicht-Bahn;
- Fig. 5: zeigt in einer schematischen Querschnittsansicht den Schritt des Umklappens von Streifen einer mehrlagigen kaschierten Schaumstoffbahn;
- Fig. 6: zeigt in einer schematischen Querschnittsansicht eine durch Umklappen gemäß Fig. 5 erzeugte Schaumstoff-Sperrschicht-Bahn;
- Fig. 7: zeigt in einer isometrischen Ansicht den Schritt des Einbringens einer Mehrzahl von Schnitten in die erste Schaumstoffbahn gemäß einer zweiten Ausführungsform des erfindungsgemäßen Verfahrens;
- Fig. 8a: zeigt in einer isometrischen Ansicht den Schritt des Aufwickelns der Schaumstoff-Sperrschicht-Bahn zu einer Dichtbandrolle;
- Fig. 8b: zeigt in einer isometrischen Ansicht die Schritte des Einbringens eines Schnitts in die Schaumstoff-Sperrschicht-Bahn und des Aufwickelns von so gebildeten Schaumstoff-Sperrschicht-Streifen zu einzelnen Dichtbandrollen in einer alternativen Ausführungsform; und
- Fig. 8c: zeigt in einer isometrischen Ansicht den Schritt des Durchtrennens einer aus der Schaumstoff-Sperrschicht-Bahn gebildeten Zwischenrolle zum Erzeugen einer Mehrzahl von Dichtbandrollen in einer weiteren alternativen Ausführungsform.

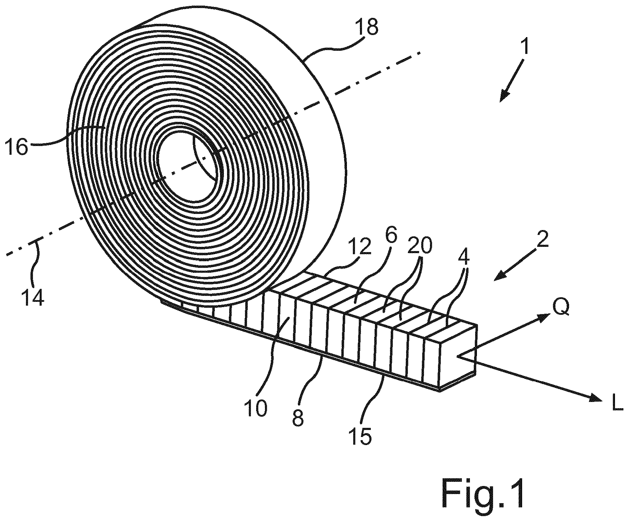

Fig. 1 zeigt eine nach dem erfindungsgemäßen Verfahren hergestellte Dichtbandrolle 1 in einer isometrischen Ansicht. Die Dichtbandrolle 1 umfasst ein aufgewickeltes Dichtband 2. Das Dichtband 2 ist in Fig. 1 teilweise von der Dichtbandrolle 1 abgewickelt dargestellt, wobei ein bezüglich der Dichtbandrolle 1 äußeres Ende des Dichtbands 2 nicht zu Dichtbandrolle 1 aufgewickelt ist. In der dargestellten Ausgestaltung hat sich das Dichtband 2 nach dem Abwickeln bereits in Richtung senkrecht zur Längsrichtung L des Dichtbands 2 aus dem komprimierten Zustand in den expandierten Zustand zurückgestellt. Die Dicke des Dichtbands 2 im expandierten Zustand beträgt üblicherweise das 2-fache bis 20-fache der Dicke des Dichtbands 2 im komprimierten Zustand in der Dichtbandrolle 1.

Das Dichtband 2 besteht aus weichem, komprimierbarem Schaumstoff und weist eine Mehrzahl innenliegender Sperrschichten 4 auf. Ferner weist das Dichtband 2 eine Oberseite 6, eine Unterseite 8 und zwei die Oberseite 6 und die Unterseite 8 verbindende Seitenflanken 10, 12 auf. Die Längsrichtung L des Dichtbands 2 ist parallel zur Unterseite 8 und zu den Seitenflanken 10, 12 ausgerichtet. Im abgewickelten Zustand des Dichtbands 2 liegt dieses auf einer ebenen Oberfläche, beispielsweise auf einer Außenseite eines Rahmenelements auf, wobei in diesem Zustand die Seitenflanken 10, 12 senkrecht zur Oberseite 6 und zur Unterseite 8 ausgerichtet sind und sich das Dichtband 2 in einem vollständig expandierten Zustand befindet. Bevorzugt wird das Dichtband 2 komprimiert zu Dichtbandrolle 1 aufgewickelt, um eine platzsparende Lagerung der Dichtbandrolle 1 zu ermöglichen. Im komprimierten Zustand des Dichtbands 2 weisen die Seitenflanken 10, 12 eine geringere Höhe auf als im expandierten Zustand des Dichtbands 2. Das heißt, dass der Abstand zwischen der Oberseite 6 und der Unterseite 8 im komprimierten Zustand geringer ist als im expandierten Zustand. Der Abstand zwischen den Seitenflanken 10, 12 bleibt beim Komprimieren des Dichtbands 2 im Wesentlichen unverändert. Eine Breite des Dichtbands 2 zwischen den Seitenflanken 10, 12 entspricht daher im Wesentlichen einer Breite der Dichtbandrolle 1 zwischen deren Stirnflächen.

Das Dichtband 2 ist um eine Drehachse 14, die sich vorzugsweise parallel zu einer Querrichtung Q des Dichtbands 2 erstreckt, zur Dichtbandrolle 1 aufgewickelt. Die Querrichtung Q erstreckt sich parallel zur Unterseite 8 des Dichtbands 2 sowie senkrecht zur Längsrichtung L des Dichtbands 2. Weist das Dichtband 2 einen rechteckigen Querschnitt auf, ist die Querrichtung Q auch senkrecht zu den Seitenflanken 10, 12 des Dichtbands 2 ausgerichtet. In der Dichtbandrolle 1 liegt die Oberseite 6 einer Windung an der Unterseite 8 einer angrenzenden Windung der Dichtbandrolle 1 an und die Seitenflanken 10, 12 des Dichtbands 2 bilden Stirnflächen 16,18 der Dichtbandrolle 1. Ferner ist das Dichtband 2 derart zur Dichtbandrolle 1 aufgewickelt, dass die Unterseite 8 bezüglich der Drehachse 14 bzw. der Dichtbandrolle 1 radial nach außen gerichtet ist, während die Oberseite 6 des Dichtbands 2 radial nach innen gerichtet ist. Die Unterseite 8 der äußersten Windung des Dichtbands 2 der Dichtbandrolle 1 bildet somit eine Mantelfläche der Dichtbandrolle 1.

Vorzugsweise weist die Unterseite 8 des Dichtbands 2 eine Klebeschicht 15 zur Verbindung des Dichtbands 2 mit einem Rahmenelement auf. Beispielsweise wird diese Klebeschicht 15 durch ein doppelseitiges Klebeband gebildet, dass mit einer Klebefläche an der Unterseite 8 des Dichtbands 2 befestigt ist und dessen gegenüberliegende, von der Unterseite 8 abgewandte Klebefläche mit einer Abdeckschicht bedeckt ist, um die Klebefläche zu schützen und ein Verkleben der einzelnen Windungen der Dichtbandrolle 1 zu vermeiden. Zur Montage des Dichtbands 2 ist eine solche Abdeckschicht von der Klebeschicht 15 stückweise abzuziehen und die Dichtbandrolle 1 ist entlang einer Außenfläche eines Rahmenelements abzurollen. Die Abdeckschicht besteht beispielsweise aus Silikonpapier. Durch die Klebeschicht 15 wird die Unterseite 8 des Dichtbands 2 mit dem Rahmenelement verbunden. Es können auch zunächst Dichtbandstreifen von der Dichtbandrolle 1 in der benötigten Länge abgeschnitten werden, die dann an dem Rahmenelement befestigt werden.

Das Dichtband 2 weist eine Mehrzahl von Dichtbandabschnitten 20 auf, die im abgewickelten Zustand des Dichtbands 2 in Längsrichtung L hintereinander angeordnet sind. Zwischen jeweils zwei aneinander angrenzenden Dichtbandabschnitten 20 der Mehrzahl von Dichtbandabschnitten 20 ist eine Sperrschicht 4 der Mehrzahl der Sperrschichten 4 angeordnet. Eine Wasserdampfdiffusion in Längsrichtung L des Dichtbands 2 innerhalb des Dichtbands 2 ist somit im Wesentlichen nur durch die Mehrzahl von Sperrschichten 4 hindurch möglich.

In der Dichtbandrolle 1 verläuft die Mehrzahl von Sperrschichten 4 zwischen einer Stirnfläche 16 und der gegenüberliegenden Stirnfläche 18 der Dichtbandrolle 1, vorzugsweise durchgehend von der Stirnfläche 16 zur gegenüberliegenden Stirnfläche 18. Daraus folgt, dass sich bei der üblichen und vorgesehenen Montage des Dichtbands 2, bei der die Unterseite 8 des Dichtbands 2 an einer Außenseite eines Rahmenelements angebracht wird, die Sperrschichten 4 zwischen dem Rahmenelement und einer Gebäudemauer, die zwischen sich eine abzudichtende Fuge bilden, sowie von einer Rauminnenseite zu einer Raumaußenseite erstrecken. Die Sperrschichten 4 erstrecken sich jedoch nicht entlang der umlaufenden Fuge in Längsrichtung des Dichtbands 2.

Die Mehrzahl von Sperrschichten 4 kann sich auch nur über einen Teil der Breite der Dichtbandrolle 1 zwischen den Stirnflächen 16, 18 und /oder einen Teil der Höhe des Dichtbands 2 zwischen der Oberseite 6 und der Unterseite 8 erstrecken. Um den gewünschten Effekt zu erzielen, erstreckt sich die Mehrzahl von Sperrschichten 4 über mindestens 50 % der Breite der Dichtbandrolle 1 und über mindestens 50 % der Höhe des Dichtbands 2. Da eine Wasserdampfdiffusion in diesem Fall um die jeweilige Sperrschicht herum im Wesentlichen ungehindert möglich ist, sind die Bereiche, in denen keine Sperrschicht vorgesehen ist, möglichst klein zu gestalten oder ganz zu vermeiden. Die Sperrschichten 4 erstrecken sich daher jeweils über mindestens 50 %, vorzugsweise über mindestens 75 % und noch mehr bevorzugt über mindestens 90 % der Breite des Dichtbands 2 zwischen den Seitenflanken 10, 12 bzw. der Breite der Dichtbandrolle 1, sowie über mindestens 50 %, vorzugsweise über mindestens 75 % und noch mehr bevorzugt über mindestens 90 % der Höhe des Dichtbands 2 zwischen der Oberseite 6 und der Unterseite 8. Besonders bevorzugt erstrecken sich die Sperrschichten 4 durchgehend zwischen den Seitenflanken 10, 12 des Dichtbands 2 sowie über mindestens 90 % der Höhe des Dichtbands 2.

In der bevorzugten Ausführungsform nach Fig. 1 ist die Mehrzahl von Sperrschichten 4 senkrecht zur Oberseite 6, zur Unterseite 8 und zu den Seitenflanken 10, 12 angeordnet. Die Sperrschichten 4 erstrecken sich somit axial durch die Dichtbandrolle 1. Genauer bildet jede Sperrschicht 4 eine Ebene, die bezüglich der Dichtbandrolle 1 und deren Drehachse 14 eine radiale und eine axiale Komponente aufweist.

Die an eine Sperrschicht 4 angrenzenden Dichtbandabschnitte 20 sind in diesem Ausführungsbeispiel entweder durch die Sperrschicht 4 selbst verbunden, beispielsweise jeweils mit dieser verklebt. Es kann aber auch eine Klebeschicht, beispielsweise die Klebeschicht 15 auf der Unterseite 8 des Dichtbands 2 vorgesehen sein, um die Dichtbandabschnitte 20 in der Längsrichtung L miteinander zu verbinden. Eine entsprechende Klebeschicht kann aber alternativ oder zusätzlich auch auf der Oberseite 6 oder auf einer der Seitenflanken 10, 12 angeordnet sein.

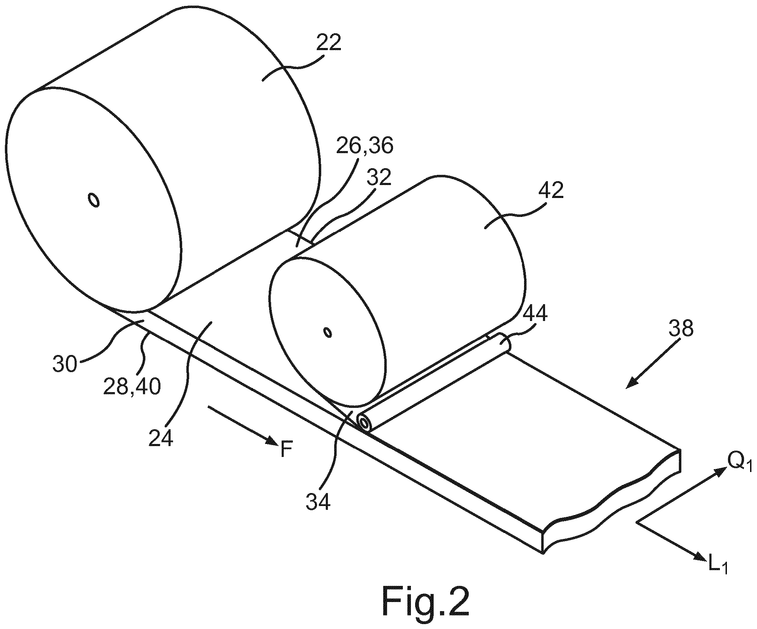

Ein Verfahren zum Herstellen einer Dichtbandrolle 1 nach Fig. 1 wird nachfolgend anhand der Fig. 2 bis 8 beschrieben.

In Fig. 2 sind die ersten Schritte eines Ausführungsbeispiels eines erfindungsgemäßen Verfahrens zur Herstellung einer Dichtbandrolle 1 dargestellt. Auf einer Ausgangsrolle 22 wird ein weicher Schaumstoff in Form einer aufgewickelten ersten Schaumstoffbahn 24 bereitgestellt. Die erste Schaumstoffbahn 24 weist vorzugsweise einen im Wesentlichen rechteckigen Querschnitt mit einer Oberseite 26, einer Unterseite 28 und zwei die Oberseite 26 und die Unterseite 28 verbindenden Seitenflanken 30, 32 auf. Eine Längsrichtung L1 der ersten Schaumstoffbahn 24 ist parallel zur Unterseite 28 und zu den Seitenflanken 30, 32 ausgerichtet. Eine Querrichtung Q1 der ersten Schaumstoffbahn 24 ist parallel zur Unterseite 28 und senkrecht zur Längsrichtung L1 der ersten Schaumstoffbahn 24 ausgerichtet. Die Breite der ersten Schaumstoffbahn 24 ist als Abstand der Seitenflanken 30, 32 definiert und die Höhe der ersten Schaumstoffbahn 24 ist zwischen der Oberseite 26 und der Unterseite 28 definiert. Die Bahnförmige Gestalt der ersten Schaumstoffbahn 24 ergibt sich insbesondre dadurch, dass die Breite der Schaumstoffbahn 24 deutlich größer ist, als die Höhe der Schaumstoffbahn. Eine Länge der Schaumstoffbahn 24 in der Längsrichtung L1 wiederum ist viel größer als die Breite und die Höhe der Schaumstoffbahn. Die erste Schaumstoffbahn 24 wird auf der Ausgangsrolle 22 in großen Längen von bis zu 500 m, vorzugsweise zwischen 3 m und 300 m, mehr bevorzugt zwischen 5 m und 200 m bereitgestellt. Die Breite der ersten Schaumstoffbahn 24 liegt üblicherweise zwischen 1 cm und 5 m, vorzugsweise zwischen 0,5 m und 1,5 m. Die Höhe der Schaumstoffbahn 24 beträgt im entspannten Zustand üblicherweise zwischen 5 mm und 30 cm, vorzugsweise zwischen 10 mm und 10 cm.

Durch Bereitstellung auf der Ausgangsrolle 22 kann die erste Schaumstoffbahn 24 besonders gut transportiert und verarbeitet werden. In der Regel befindet sich die erste Schaumstoffbahn 24 auf der Ausgangsrolle 22 in einem nicht oder nur geringfügig komprimierten Zustand. Es ist auch möglich, dass sich die erste Schaumstoffbahn 24 auf der Ausgangsrolle 22 in einem komprimierten Zustand befindet, allerdings muss dann nach dem Abwickeln von der Ausgangsrolle 22 eine rechtzeitige Rückstellung des Schaumstoffmaterials im Prozessablauf sichergestellt sein.

Um verschiedene Ausführungsbeispiele abzudecken, ist nachfolgend auch von einer ersten Fläche und einer zweiten Fläche einer Bahn, zum Beispiel der ersten Schaumstoffbahn 24 die Rede. Dabei entspricht die erste Fläche der Oberseite oder der Unterseite der jeweiligen Bahn und die zweite Fläche entspricht der jeweils anderen aus Oberseite und Unterseite der entsprechenden Bahn.

Nach dem Abwickeln von der Ausgangsrolle 22 wird die erste Schaumstoffbahn 24 entlang einer Förderrichtung bewegt, die durch den Pfeil F gekennzeichnet ist. Die Förderrichtung F ist parallel zur Längsrichtung L1 der Schaumstoffbahn 24.

Anschließend wird eine erste Sperrschicht 34 auf eine erste Fläche 36 der ersten Schaumstoffbahn 24 aufgebracht, um so eine kaschierte Schaumstoffbahn 38 zu bilden. Im dargestellten Ausführungsbeispiel entspricht die erst Fläche 36 der Oberseite 26 der ersten Schaumstoffbahn 24.

Nach dem Abwickeln von der Ausgangsrolle 22 kann in einer bevorzugten Ausführungsform auch eine zweite Sperrschicht (nicht dargestellt) auf eine der ersten Fläche 36 gegenüberliegende zweite Fläche 40 der ersten Schaumstoffbahn 24 aufgebracht werden. Die zweite Fläche 40 entspricht im vorliegenden Fall der Unterseite 28 der Schaumstoffbahn 24. Da durch Vorsehen der zweiten Sperrschicht die Anzahl innenliegender Sperrschichten im Dichtband 2 bzw. der Dichtbandrolle 1 auf einfache Art und Weise erhöht werden kann, ist diese Ausführungsform bevorzugt. Das Verfahren zur Herstellung der Dichtbangrolle 1 wird daher nachfolgend unter Bezugnahme auf eine Ausführungsform beschrieben, bei der eine erste Sperrschicht 34 und eine zweite Sperrschicht vorgesehen sind. Es versteht sich, dass das Verfahren analog aber auch ohne Vorsehen einer zweiten Sperrschicht möglich ist.

In der in Fig. 2 dargestellten Ausführungsform ist die erste Sperrschicht 34 durch eine Folienbahn gebildet, die auf einer Folienvorratsrolle 42 bereitgestellt ist. Ebenso kann die zweite Sperrschicht durch eine Folienbahn gebildet sein, die ebenfalls auf einer Folienvorratsrolle bereitgestellt ist. Vorzugsweise wird die als Folienbahn ausgebildete erste Sperrschicht 34 von oben auf die erste Fläche 36 der ersten Schaumstoffbahn 24 aufgebracht, die zweite Sperrschicht wird dann entsprechend von unten auf die zweite Fläche 40 der ersten Schaumstoffbahn 24 aufgebracht. Das Aufbringen der ersten Sperrschicht 34 und optional der zweiten Sperrschicht erfolgt in der Regel im Bereich einer Verbindungseinheit, die schematisch durch die Walze 44 dargestellt ist. Das Aufbringen der ersten Sperrschicht 34 und optional der zweiten Sperrschicht umfasst in der Regel das Verbinden der jeweiligen Sperrschicht mit der ersten Schaumstoffbahn 24, wobei der Verbindungsschritt wiederum einen Schritt der Wärmeaufbringung und /oder einen Schritt, die Sperrschicht und die erste Schaumstoffbahn 24 aneinanderzudrücken, umfasst. Bei der Verwendung einer Folienbahn erfolgt die Verbindung mit der ersten Schaumstoffbahn 24 in der Verbindungseinheit vorzugsweise durch Laminieren, mehr bevorzugt durch thermisches Laminieren.

Die erste Sperrschicht 34 und die zweite Sperrschicht können jeweils durch eine Bahn eines einseitig oder beidseitig klebenden Klebebands gebildet sein. Die klebende Seite eines solchen Klebebands ist dann in der Regel mit einer Abziehfolie versehen, die kurz vor dem Aufbringen auf die erste Schaumstoffbahn 24 abgelöst wird. Ebenso können die erste Sperrschicht 34 und die zweite Sperrschicht durch eine Folienbahn gebildet sein, die selbst eine Schicht eines Klebebands oder eine feste Schicht eines Schmelzklebers umfasst. Schließlich kann zur Bildung der ersten Sperrschicht 34 und der zweiten Sperrschicht auch ein klebstoffartiges flüssiges Medium mittels Düsen (zum Beispiel Schmelzdüse, Flachdüse, Mischdüse) oder über Walzenauftrag (Transferwalze) auf die erste Schaumstoffbahn 24 aufgebracht werden. Je nach Klebstoff kann anschließend vorzugsweise in einer Verbindungseinheit eine Verbindung mit der ersten Schaumstoffbahn stattfinden, wobei der Klebstoff in der Regel verfestigt wird. Es kommen grundsätzlich chemische und physikalische Arten der Verfestigung in Frage. Auch hier wird die Verbindung mit der ersten Sperrschicht 34 bzw. der zweiten Sperrschicht mit der ersten Schaumstoffbahn 24 in der Regel wieder einen Schritt der Wärmeaufbringung und/oder einen Schritt, die erste Sperrschicht 34 bzw. die zweite Sperrschicht und die erste Schaumstoffbahn 24 aneinander zu drücken, umfassen. Es ist auch möglich, auf eine Folienbahn einseitig einen Sprühkleber aufzubringen und diese Kombination als erste Sperrschicht 34 bzw. zweite Sperrschicht zu verwenden. Schließlich kann als Sperrschicht auch eine Haut des Schaumstoffmaterials der ersten Schaumstoffbahn 24 selbst dienen, wenn die erste Schaumstoffbahn 24 auf der entsprechenden Seite angeschmolzen wird und danach wieder verhärtet oder wenn die erste Schaumstoffbahn 24 fertigungsbedingt eine Haut aufweist.

Jeder oben genannte Schritt der Wärmeaufbringung erfolgt mittels einer Heizvorrichtung, die üblicherweise als Warmluftgebläse ausgestaltet ist. Es kommt aber auch Strahlungserhitzung in Frage, beispielsweise mittels einer Infrarotheizung oder Mikrowellenheizung.

Des Weiteren ist es denkbar, die erste Sperrschicht 34 und die zweite Sperrschicht nur teilweise auf die entsprechende erste Fläche 36 bzw. zweite Fläche 40 aufzubringen. Die erste und die zweite Sperrschicht können auch jeweils mehrteilig ausgebildet sein und die erste und die zweite Fläche 36, 40 vollständig oder teilweise bedecken. Beispielsweise können einzelne Streifen einer Sperrschicht in Längsrichtung L1 auf die erste und/oder die zweite Fläche 36, 40 aufgebracht werden. Zudem ist es möglich für die erste und die zweite Sperrschicht unterschiedliche Materialien zu verwenden. Ist die erste bzw. die zweite Sperrschicht mehrteilig ausgebildet, können auch die einzelnen Bestandteile der ersten bzw. der zweiten Sperrschicht aus unterschiedlichen Materialien sein. Es wird auf diese Weise eine Vielzahl von Möglichkeiten bereitgestellt, die Eigenschaften gezielt an die gegebenen Anforderungen anzupassen.

Es ist auch möglich, dass eine bereits mit einer ersten Sperrschicht 34 und/oder einer zweiten Sperrschicht kaschierte Schaumstoffbahn 38, die zuvor hergestellt wurde, zu der Ausgangsrolle 22 aufgewickelt ist.

Es ist aus Fig. 2 gut ersichtlich, dass die Oberseite 6 und die Unterseite 8 der ersten Schaumstoffbahn 24 nach dem Abwickeln großflächig ausgebildet und gut zugänglich sind. Es ist daher einfach, ein Sperrschichtmaterial entsprechend großflächig aufzubringen. Zudem ist das Sperrschichtmaterial nach dem Aufbringen weiterhin gut zugänglich und einsehbar, sodass die Qualität der gebildeten Sperrschicht einfach überwacht werden kann. Erst im weiteren Verfahren werden die Sperrschichten innerhalb einer Bahn bzw. eines Bands angeordnet und entziehen sich dadurch zunehmend einer guten Zugänglichkeit und Einsehbarkeit.

Es kann weiterhin wünschenswert sein, ein Zusatzmaterial, wie eingangsbeschrieben, aufzubringen (nicht dargestellt). Das Zusatzmaterial kann dabei bereits mit der ersten Sperrschicht 34 und/oder der zweiten Sperrschicht verhaftet sein und so in einem Schritt mit der entsprechenden Sperrschicht auf die erste Schaumstoffbahn 24 aufgebracht werden. Alternativ kann das Zusatzmaterial vollflächig oder auch nur streifenförmig noch vor der ersten Sperrschicht 34 und der zweiten Sperrschicht auf die erste Fläche 36 und/oder die zweite Fläche 40 der ersten Schaumstoffbahn 24 aufgebracht werden. Das Zusatzmaterial kann auch erst nach der ersten Sperrschicht 34 und der zweiten Sperrschicht außen vollflächig oder nur streifenförmig auf die jeweilige Sperrschicht aufgebracht werden.

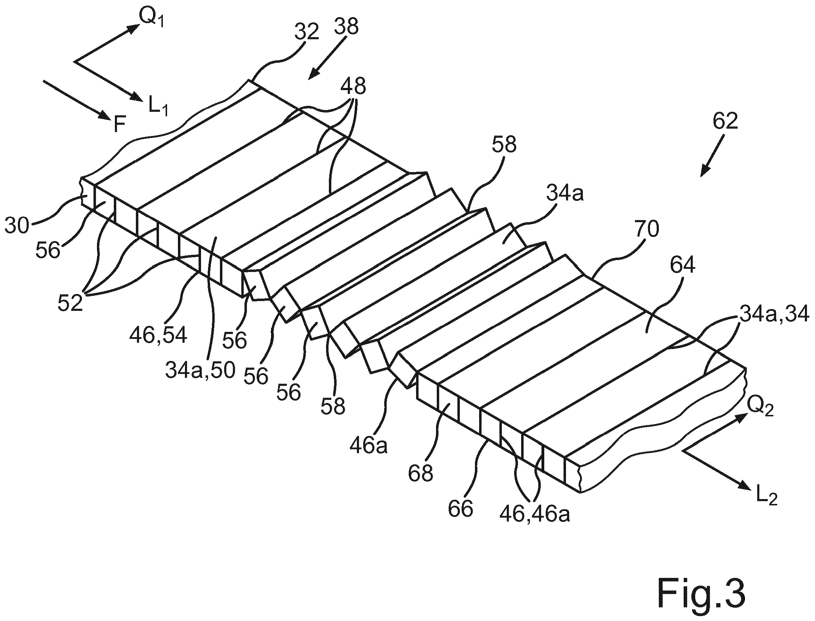

In Fig. 3 sind die weiteren Verfahrensschritte einer ersten Ausführungsform des erfindungsgemäßen Verfahrens veranschaulicht.

Eine nach Fig. 2 gebildete kaschierte Schaumstoffbahn 38 wird den weiteren Verfahrensschritten in Förderrichtung F zugeführt. Die kaschierte Schaumstoffbahn 38 umfasst die erste Schaumstoffbahn 24, die erste Sperrschicht 34 und vorzugsweise die zweite Sperrschicht 46, die auf die zweiten Fläche 40 der ersten Schaumstoffbahn 24 aufgebracht ist. In die kaschierte Schaumstoffbahn 38 sind eine Mehrzahl von ersten Schnitten 48 in die Oberseite 50 der kaschierten Schaumstoffbahn 38 in Querrichtung Q1 eingebracht worden und eine Mehrzahl von zweiten Schnitten 52 ist in eine Unterseite 54 der kaschierten Schaumstoffbahn 38 in Querrichtung Q1 eingebracht worden. Ein zweiter Schnitt 52 ist jeweils in der Längsrichtung L1 versetzt zu einem ersten Schnitt 48 in die kaschierte Schaumstoffbahn 38 eingebracht. Die Mehrzahl von ersten Schnitten 48 und die Mehrzahl von zweiten Schnitten 52 bildet eine Mehrzahl von in Längsrichtung L1 hintereinander angeordneten Streifen 56 aus der kaschierten Schaumstoffbahn 38. In dieser Ausführungsform verbleibt zwischen zwei aneinander angrenzenden Streifen 56 jeweils ein Verbindungsabschnitt 58. Wenn der Abschnitt der ersten Fläche 36 der ersten Schaumstoffbahn 24 im Bereich der Mehrzahl von ersten Schnitten 48 jeweils von der ersten Sperrschicht 34 bedeckt ist, wird diese vom jeweiligen ersten Schnitt 48 der Mehrzahl von ersten Schnitten 48 durchtrennt. Analog durchtrennt die Mehrzahl von zweiten Schnitten 52 die zweite Sperrschicht 46, sofern die zweite Fläche 40 der ersten Schaumstoffbahn 24 im Bereich der Mehrzahl von zweiten Schnitten 52 von der zweiten Sperrschicht 46 bedeckt ist.

Ein "erster Schnitt" ist dabei ein Schnitt, der in die erste Fläche einer Schaumstoffbahn eingebracht wird. Ein "zweiter Schnitt" ist ein Schnitt, der in die zweite Fläche einer Schaumstoffbahn eingebracht wird. Durch die Angabe "erster" und "zweiter" soll keine zeitliche Reihenfolge des Einbringens der Schnitte in die Schaumstoffbahn festgelegt sein. So kann beispielsweise das Einbringen eines zweiten Schnitts auch vor dem Einbringen eines ersten Schnitts erfolgen. Es können auch alle Schnitte gleichzeitig in die Schaumstoffbahn eingebracht werden. Da die Mehrzahl von ersten Schnitten 48 und die Mehrzahl von zweiten Schnitten 52 in Querrichtung Q1 von einer Seitenflanke 30 zur gegenüberliegenden Seitenflanke 32 der ersten Schaumstoffbahn 24 bzw. der kaschierten Schaumstoffbahn 38 in diese eingebracht werden, also quer zur Förderrichtung F bzw. Längsrichtung L1, ist es bevorzugt, dass die kaschierte Schaumstoffbahn 38 zum Zeitpunkt des Einbringens der Mehrzahl von ersten und zweiten Schnitten 48, 52 stillsteht. Vorzugsweise werden während des Stillstands mehrere Schnitte der Mehrzahl von ersten Schnitten 48 und zweiten Schnitten 52 in die kaschierte Schaumstoffbahn 38 gleichzeitig oder kurz nacheinander eingebracht. Alternativ ist es möglich, das Mittel zum Einbringen der Mehrzahl von ersten und zweiten Schnitten 48, 52 mit der kaschierten Schaumstoffbahn 38 in Förderrichtung F mitbewegt werden, während sie die jeweiligen Schnitte 48, 52 einbringen. Dies kann sich jedoch nachteilig auf die Qualität der Schnitte 48, 52 auswirken und bedingt in der Regel einen erhöhten Steuerungsaufwand.

Durch das Einbringen der Mehrzahl von ersten Schnitten 48 und der Mehrzahl von zweiten Schnitten 52 werden parallel verlaufende Streifen 56 gebildet, wobei zwischen zwei aneinander angrenzenden Streifen 56 ein Verbindungsabschnitt 58 verbleibt. Die Mehrzahl von ersten Schnitten 48 teilt die erste Sperrschicht 34 in eine Mehrzahl erster Sperrschichtabschnitte 34a. Die Mehrzahl von zweiten Schnitten 52 teilt die zweite Sperrschicht 46 in eine Mehrzahl zweiter Sperrschichtabschnitte 46a. Jeder Streifen 56 umfasst folglich einen Schaumstoffstreifen 60, einen an diesem angebrachten ersten Sperrschichtabschnitt 34a sowie optional einen an diesem angebrachten zweiten Sperrschichtabschnitt 46a.

Die Mehrzahl von ersten Schnitten 48 und die Mehrzahl von zweiten Schnitten 52 werden vorzugsweise mittels Messern, mehr bevorzugt mittels paralleler Messer in die kaschierte Schaumstoffbahn 38 in Querrichtung Q1 eingebracht. Neben Messern sind dem Fachmann auch andere Verfahren zum Schneiden von Schaumstoffbahnen, wie zum Beispiel Sägen oder Wasserstrahlschneiden bekannt, die ohne Weiteres Verwendung finden können. Die Mittel zum Einbringen der Mehrzahl von ersten und zweiten Schnitten 48, 52 können in Querrichtung Q1 durch die kaschierte Schaumstoffbahn 38 hindurchbewegt werden. Die Mittel zum Einbringen der Mehrzahl von ersten und zweiten Schnitten 48, 52 können sich aber auch über die gesamte Breite der kaschierten Schaumstoffbahn 38 in Querrichtung Q1 erstrecken, sodass das Einbringen der Schnitte 48, 52 durch Bewegen der Mittel senkrecht zur Oberseite 50 und Unterseite 54 der kaschierten Schaumstoffbahn 38 erfolgen kann. Solche Mittel können auch verhältnismäßig einfach in Förderrichtung F mit der kaschierten Schaumstoffbahn 38 mitbewegt werden.

Die Mehrzahl von ersten Schnitten 48 und die Mehrzahl von zweiten Schnitten 52 können die erste Schaumstoffbahn 24 der kaschierten Schaumstoffbahn 38 jeweils entweder vollständig durchtrennen oder nicht vollständig durchtrennen, sodass zwischen zwei aneinander angrenzenden Streifen 56 ein Schaumstoffsteg verbleibt.

Die Mehrzahl von ersten Schnitten 48 kann die erste Schaumstoffbahn 24 in dieser ersten Ausführungsform des erfindungsgemäßen Verfahrens nur dann vollständig durchtrennen, wenn die zweite Sperrschicht 46 auf der zweiten Fläche 40 der ersten Schaumstoffbahn 24 vorgesehen ist. Die Mehrzahl von Verbindungsabschnitten 58 im Bereich der Unterseite 54 der kaschierten Schaumstoffbahn 38 ist dann ausschließlich durch die zweite Sperrschicht 46 gebildet. Durchtrennt die Mehrzahl von ersten Schnitten 48 die erste Schaumstoffbahn 24 nicht vollständig, sodass zwischen aneinander angrenzenden Schaumstoffstreifen 60 ein Schaumstoffsteg verbleibt, umfasst die Mehrzahl von Verbindungsabschnitten 58 im Bereich der Unterseite 54 der kaschierten Schaumstoffbahn 38 diesen Schaumstoffsteg und optional die zweite Sperrschicht 46.

Durchtrennt die Mehrzahl von zweiten Schnitten 52 die erste Schaumstoffbahn 24 vollständig, wird die Mehrzahl von Verbindungsabschnitten 58 im Bereich der Oberseite 50 der kaschierten Schaumstoffbahn 38 alleine durch die erste Sperrschicht 34 gebildet. Durchtrennt die Mehrzahl von zweiten Schnitten 52 die erste Schaumstoffbahn 24 nicht vollständig, wird die Mehrzahl von Verbindungsabschnitten 58 im Bereich der Oberseite 50 der kaschierten Schaumstoffbahn 38 durch einen Schaumstoffsteg und die erste Sperrschicht 34 gebildet.

Im Hinblick auf die nachfolgenden Verfahrensschritte ist es bevorzugt, die Verbindungsabschnitte 58 möglichst dünn zu gestalten. Werden die Verbindungsabschnitte 58 nur durch die erste Sperrschicht 34 und die zweite Sperrschicht 46 gebildet, bilden diese im Bereich der Verbindungsabschnitte 58 eine Art Scharnierverbindung, die die beiden angrenzenden Streifen 56 gelenkig miteinander verbindet. Auch ein Schaumstoffsteg zwischen den aneinander angrenzenden Streifen 56 bzw. Schaumstoffstreifen 60 bildet eine solche Scharnierverbindung. Es ist jedoch zu berücksichtigen, dass mit zunehmender Höher des Schaumstoffstegs das nachfolgende Umklappen der Streifen 56 im Beriech der Verbindungsabschnitte 58 erschwert wird. Ein Schaumstoffsteg setzt in Abhängigkeit seiner Höhe dem Umklappen der Streifen 56 einen Widerstand entgegen. Falls solche Schaumstoffstege vorgesehen sind, weisen diese deshalb bevorzugt eine Höhe von maximal 10 mm, mehr bevorzugt von maximal 5 mm und noch mehr bevorzugt von maximal von 1 mm bis 2 mm auf. Vorteilhaft sind die Schaumstoffstege jedoch dahingehend, dass sie die erste Sperrschicht 34 und/oder die zweite Sperrschicht 46 beim Einbringen der Mehrzahl von ersten und zweiten Schnitten 48, 52 vor Beschädigungen schützen und einen erhöhten Zusammenhalt der Streifen 56 in Längsrichtung L1 gewährleisten.

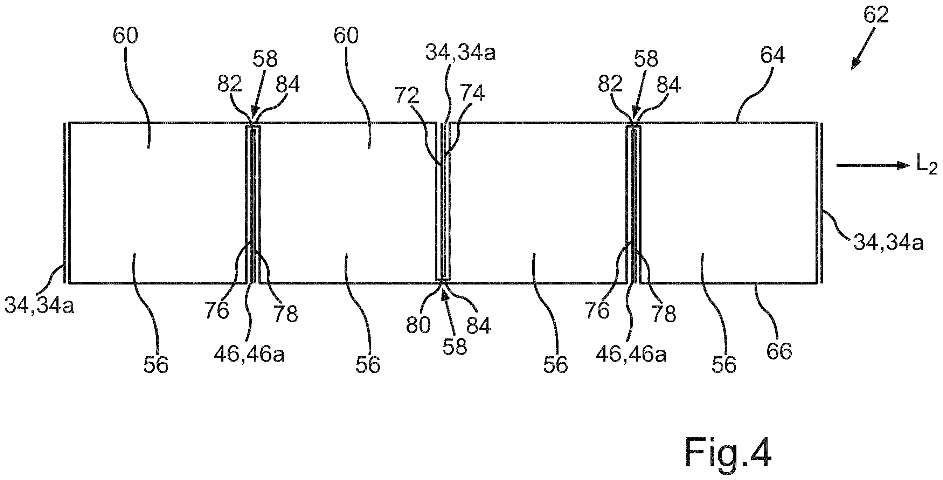

Aus Fig. 3 ist weiterhin der Schritt des Umklappens der Streifen 56 im Bereich der Verbindungsabschnitte 58 zur Herstellung einer Schaumstoff-Sperrschicht-Bahn 62 ersichtlich. Ein Querschnitt durch die Schaumstoff-Sperrschicht-Bahn 62 ist in Fig. 4 dargestellt.

Zwei Streifen 56, die durch einen ersten Schnitt 48 voneinander getrennt sind, sind durch einen Verbindungsabschnitt 58 im Bereich der Unterseite 54 der kaschierten Schaumstoffbahn 38 miteinander verbunden. Diese Streifen 56 werden derart im Bereich dieser Verbindungsabschnitte 58 umgeklappt, dass sich die Teilabschnitte der zweiten Fläche 40 der ersten Schaumstoffbahn 24 bzw. die Teilabschnitte der Unterseite 54 der kaschierten Schaumstoffbahn 38, die jeweils an einen gemeinsamen Verbindungsabschnitt 58 angrenzen, gegenüberliegen. Dadurch wird die zweite Sperrschicht 46 bzw. die zweiten Sperrschichtabschnitte 46a im Inneren der Schaumstoff-Sperrschicht-Bahn 62 angeordnet. Die zweiten Sperrschichtabschnitte 46a zweier aneinander angrenzender Streifen 56 mit einem gemeinsamen Verbindungsabschnitt 58 im Bereich der Unterseite 54 kommen flächig aneinander zu liegen.

Streifen 56, die durch einen zweiten Schnitt 52 voneinander getrennt sind, sind durch einen Verbindungsabschnitt 58 im Bereich der ersten Fläche 36 der ersten Schaumstoffbahn 24 bzw. der Oberseite 50 der kaschierten Schaumstoffbahn 38 miteinander verbunden. Diese Streifen 56 werden derart im Bereich dieser Verbindungsabschnitte 58 umgeklappt, dass sich die Teilabschnitte der ersten Fläche 36 bzw. der Oberseite 50 der kaschierten Schaumstoffbahn 38, die jeweils an einen gemeinsamen Verbindungsabschnitt 58 angrenzen, gegenüberliegen. Dadurch wird die erste Sperrschicht 34 bzw. die Mehrzahl von ersten Sperrschichtabschnitten 34a im Inneren der Schaumstoff-Sperrschicht-Bahn 62 angeordnet. Die erste Sperrschicht 34 bzw. deren erste Sperrschichtabschnitte 34a zweier aneinander angrenzender Streifen 56 mit einem gemeinsamen Verbindungsabschnitt 58 im Bereich der ersten Fläche 36 bzw. der Oberseite 50 kommen möglichst flächig aneinander zu liegen.

Durch das Umklappen ist es besonders einfach möglich, die erste und die zweite Sperrschicht 34, 46 im Inneren der Schaumstoff-Sperrschicht-Bahn 62 anzuordnen. Ein aufwändiges Einbringen eines Sperrschichtmaterials in Einschnitte einer Schaumstoffbahn oder sonstigen Dichtelements ist nicht notwendig.

Das Umklappen der Streifen 56 im Bereich der Verbindungsabschnitte 58 erfolgt vorzugsweise, während die kaschierte Schaumstoffbahn 38 bzw. die Streifen 56 weiter in Förderrichtung F transportiert werden. Es können dazu Mittel vorgesehen sein, um die Mehrzahl von ersten und zweiten Schnitten 48, 52 zu öffnen. Beispielsweise können die Fördermittel der kaschierten Schaumstoffbahn 38 und der Schaumstoff-Sperrschicht-Bahn 62 dazu eingerichtet sein, eine Geschwindigkeitsdifferenz der Fördergeschwindigkeit der jeweiligen Bahn in Förderrichtung F zu erzeugen und so die Streifen 56 in dem Bereich, in dem sie umgeklappt werden, auseinander zu ziehen. Hierzu ist die Fördergeschwindigkeit der Schaumstoff-Sperrschicht-Bahn 62 in Förderrichtung F vorzugsweise größer als die Fördergeschwindigkeit der kaschierten Schaumstoffbahn 38 in Förderrichtung F. Es können aber auch Mittel vorgesehen sein, die in die Mehrzahl von ersten Schnitten 48 und/oder die Mehrzahl von zweiten Schnitten 52 eingreifen und die aneinander angrenzenden Streifen 56 allmählich auseinander spreizen. Das vollständige Umklappen kann durch geeignete Führungen, die beispielsweise einen entsprechenden Druck auf die Streifen 56 ausüben und so ein Umklappen der Streifen 56 bewirken, erfolgen.

Die Schaumstoff-Sperrschicht-Bahn 62 weist eine Oberseite 64, eine Unterseite 66 und zwei die Oberseite 64 und die Unterseite 66 verbindende Seitenflanken 68, 70 auf. Die Seitenflanken 68, 70 werden dabei durch die entsprechenden Seitenflanken der kaschierten Schaumstoffbahn 38 bzw. durch die entsprechenden Seitenflanken 30, 32 der ersten Schaumstoffbahn 24 gebildet. Die Oberseite 64 der Schaumstoff-Sperrschicht-Bahn 62 wird durch die Schnittflächen der Mehrzahl von ersten Schnitten 48 gebildet, die durch das Umklappen der Streifen 56 an der Oberseite 64 der Schaumstoff-Sperrschicht-Bahn 62 angeordnet sind. Die Unterseite 66 der Schaumstoff-Sperrschicht-Bahn 62 wird durch die Schnittflächen der Mehrzahl von zweiten Schnitten 52 gebildet, die entsprechend durch Umklappen der Streifen 56 an der Unterseite 66 der Schaumstoff-Sperrschicht-Bahn 62 angeordnet sind. Eine Längsrichtung L2 der Schaumstoff-Sperrschicht-Bahn 62 erstreckt sich parallel zur Unterseite 66 und parallel zu den Seitenflanken 68, 70 der Schaumstoff-Sperrschicht-Bahn 62. Die Querrichtung Q2 der Schaumstoff-Sperrschicht-Bahn 62 erstreckt sich parallel zur Unterseite 66 sowie senkrecht zur Längsrichtung L2 der Schaumstoff-Sperrschicht-Bahn 62. Die Längsrichtung L2 der Schaumstoff-Sperrschicht-Bahn 62 ist parallel zur Längsrichtung L1 der Schaumstoffbahn 24, 38 sowie parallel zur Förderrichtung F ausgerichtet. Die Querrichtung Q2 der Schaumstoff-Sperrschicht-Bahn 62 ist parallel zur Querrichtung Q1 der Schaumstoffbahn 24, 38 ausgerichtet.

In Fig. 4 ist die Schaumstoff-Sperrschicht-Bahn 62 nach Fig. 3 in einer Querschnittsansicht in Längsrichtung L2 der Schaumstoff-Sperrschicht-Bahn 62 dargestellt. Die nach innen geklappten ersten und zweiten Sperrschichtabschnitte 34a, 46a bilden nun erste und zweite Sperrschichten 34, 46, die jeweils zwischen zwei aneinander angrenzenden Schaumstoffstreifen 60 aufgenommen sind, im Wesentlichen senkrecht zur Unterseite 66 der Schaumstoff-Sperrschicht-Bahn 62 ausgerichtet sind und sich über einen Großteil der Höhe der Schaumstoff-Sperrschicht-Bahn 62 zwischen deren Oberseite 64 und deren Unterseite 66 erstrecken. Wie aus Fig. 4 besonders gut hervorgeht, bilden die Sperrschichtabschnitte 34a der ersten Sperrschicht 34 Schenkel 72, 74 der ersten Sperrschicht 34, wobei die zwei Schenkel 72, 74 miteinander verbunden sind. Die zweiten Sperrschichtabschnitte 46a der zweiten Sperrschicht 46 bilden Schenkel 76, 78 der zweiten Sperrschicht 46, wobei auch die Schenkel 76, 78 miteinander verbunden sind.

Die Schenkel 72, 74, 76, 78 der ersten und der zweiten Sperrschicht 34, 46 ergeben sich insbesondere durch das zuvor beschriebene Umklappen der Streifen 56 entlang der Verbindungsabschnitte 58. Die Schenkel 72, 74 der ersten Sperrschicht 34 sind daher im Bereich des jeweils angrenzenden Verbindungsabschnitts 58 miteinander verbunden. Auch die Schenkel 76, 78 der zweiten Sperrschicht 46 sind im Bereich eines jeweils angrenzenden Verbindungsabschnitts 58 miteinander verbunden. Die Schenkel 72, 74 der ersten Sperrschicht 34 sind im Bereich der Unterseite 66 der Schaumstoff-Sperrschicht-Bahn 62 miteinander verbunden und die Schenkel 76, 78 der zweiten Sperrschicht 46 sind im Bereich der Oberseite 64 der Schaumstoff-Sperrschicht-Bahn 62 miteinander verbunden. In Längsrichtung L2 betrachtet weist die Schaumstoff-Sperrschicht-Bahn 62 bevorzugt abwechselnd eine erste Sperrschicht 34 und eine zweite Sperrschicht 46 auf, die sich in Querrichtung Q2 der Schaumstoff-Sperrschicht-Bahn 62 erstrecken. Dies ergibt sich daraus, dass in der bevorzugten Ausführungsform in Längsrichtung betrachtet abwechselnd ein erster Schnitt 48 und ein zweiter Schnitt 52 in die kaschierte Schaumstoffbahn 38 eingebracht werden, sodass die dadurch gebildeten Streifen 56 abwechselnd im Bereich eines Verbindungsabschnitts 58 an der Oberseite und im Bereich eines Verbindungsabschnitts 58 an der Unterseite umgeklappt werden.

Durch das Umklappen der Streifen 56 entlang der Verbindungsabschnitte 58 werden die erste und die zweite Sperrschicht 34, 46 im Bereich der jeweils angrenzenden Verbindungsabschnitte 58 gekrümmt. Die zwei Schenkel 72, 74, 76, 78 einer Sperrschicht 34, 46 sind dann vorzugsweise durch eine Krümmung 80, 82 der jeweiligen Sperrschicht im Bereich der Längsränder der Schenkel 72, 74, 76, 78 miteinander verbunden. Die Krümmung 80 der ersten Sperrschicht 34 und die Krümmung 82 der zweiten Sperrschicht 46 können aber auch aus einem anderen streifenförmigen Material gebildet sein, das beidseitig mit den jeweiligen Schenkeln 72, 74, 76, 78 verbunden ist. Die Krümmung 80, 82 kann U-förmig oder V-förmig ausgebildet sein oder eine andere geometrische Form aufweisen. Die Schenkel 72, 74, 76, 78 und die Krümmung 80, 82 können z. B. eine Schlaufe bilden. Die zwei Schenkel 72, 74, 76, 78 einer Sperrschicht 34, 46 sind vorzugsweise integral ausgebildet. Nach dem Umklappen verlaufen die Schenkel 72, 74, 76, 78 einer Sperrschicht 34, 46 im Wesentlichen parallel zueinander.

In Fig. 4 weist die Schaumstoff-Sperrschicht-Bahn 62 eine bevorzugte, im Wesentlichen ebene Gestalt auf. Dies wird dadurch erreicht, dass die ersten Schnitte 48 der Mehrzahl von ersten Schnitten 48 und die zweiten Schnitte 52 der Mehrzahl von zweiten Schnitten 52 in Längsrichtung L1 betrachtet in gleichmäßigen Abständen zueinander in die kaschierte Schaumstoffbahn 38 eingebracht werden, um Streifen 56 gleicher Breite zu erzeugen. Wie aus einer Zusammenschau der Fig. 3 und 4 hervorgeht, entspricht eine Breite der Streifen 56 in der kaschierten Schaumstoffbahn 38 nach dem Umklappen zur Schaumstoff-Sperrschicht-Bahn 62 der Höhe der Streifen 56. Eine gleichmäßige Breite aller Streifen 56 der kaschierten Schaumstoffbahn 38 führt somit zu einer gleichmäßigen Höhe der Streifen 56 in der Schaumstoff-Sperrschicht-Bahn 62.

Um ein profiliertes Dichtband 2 bzw. eine profilierte Schaumstoff-Sperrschicht-Bahn 62 zu erhalten, kann es aber auch gewünscht sein, die ersten Schnitte 48 und die zweiten Schnitte 52 in ungleichmäßigen Abständen zueinander in die kaschierte Schaumstoffbahn 38 einzubringen. Die Streifen 56 weisen in der kaschierten Schaumstoffbahn 38 dann unterschiedliche Breiten auf, was dazu führt, dass die Streifen 56 in der Schaumstoff-Sperrschicht-Bahn 62 unterschiedliche Höhen aufweisen. Dadurch kann ein profiliertes Dichtband 2 hergestellt werden, das in einem Einbauzustand des Dichtbands 2 abschnittsweise unterschiedlich stark komprimierte Bereiche aufweist.

Zwei aneinander angrenzende Streifen 56 sind zumindest durch die miteinander verbundenen Schenkel 72, 74, 76, 78 der jeweiligen Sperrschicht 34, 46 bzw. deren Krümmung 80, 82 miteinander verbunden. Um den Zusammenhalt der Schaumstoff-Sperrschicht-Bahn 62 weiter zu erhöhen, ist es bevorzugt, dass die sich jeweils gegenüberliegenden Teilabschnitte der ersten Fläche 36 und der zweiten Fläche 40 der Schaumstoffstreifen 60, die jeweils mit der ersten Sperrschicht 34 oder der zweiten Sperrschicht 46 versehen sind, nach dem Umklappen miteinander verbunden werden. Dies kann insbesondere dadurch geschehen, dass die Streifen 56 vor dem Verbinden erwärmt werden, sodass das Material der Sperrschichten 34, 46 auf eine Temperatur oberhalb ihrer jeweiligen Schmelztemperatur bzw. ihres Klebepunkts erwärmt werden. Das Verbinden einander gegenüberliegender Teilabschnitte der ersten bzw. der zweiten Fläche 36, 40 der Streifen 56 umfasst das Erwärmen der ersten Sperrschicht 34 und optional der zweiten Sperrschicht 46, wobei ein besonders einfaches und gleichmäßiges Erwärmen des Materials dadurch ermöglicht wird, dass die gesamte kaschierte Schaumstoffbahn 38 vor dem Umklappen der Streifen 56 erwärmt wird. Z. B. können entsprechende Heizvorrichtungen vorgesehen werden, die die Oberseite 50 und die Unterseite 54 der kaschierten Schaumstoffbahn 38 gleichmäßig erwärmen. Z. B. kann die gesamte kaschierte Schaumstoffbahn 38 durch einen Wärmetunnel geführt werden.

Die Dichtbandstreifen 56 werden dann unmittelbar nach dem Umklappen zur Schaumstoff-Sperrschicht-Bahn 62 miteinander verbunden. Wurden die Sperrschichten 34, 46 vollständig erwärmt, können die nach dem Umklappen einander gegenüberliegenden Schenkel 72, 74 bzw. 76, 78 der jeweiligen Sperrschicht 34, 46 großflächig, vorzugsweise nahezu vollständig miteinander verhaftet bzw. verschmolzen werden. Die Schenkel 72, 74 bzw. 76, 78 der jeweiligen Sperrschicht 34, 46 können aber auch nur abschnittsweise miteinander verhaftet oder verschmolzen werden. Es ist auch möglich, erst die Schaumstoff-Sperrschicht-Bahn 62 nach dem Umklappen der Streifen 56 zu erwärmen. Dabei kann es ausreichend sein, wenn nur Randbereiche der Sperrschichten 34, 46 im Bereich der Oberseite 64 und der Unterseite 66 der Schaumstoff-Sperrschicht-Bahn 62 erwärmt werden. Die jeweiligen Schenkel 72, 74 und 76, 78 werden dann nur abschnittsweise, nämlich in diesen Randbereichen der Schaumstoff-Sperrschicht-Bahn 62 miteinander verhaftet oder verschmolzen. Es kann sein, dass die miteinander verbundenen, insbesondere verschmolzenen Sperrschichtabschnitte 34a, 46a zumindest abschnittsweise eine Einheit bilden und in einem solchen Abschnitt dann gegebenenfalls nicht mehr voneinander zu unterscheiden sind.

Das Verbinden der Streifen 56 umfasst ferner bevorzugt das Aufbringen von Druck nach dem Erwärmen. Der Druck ist dabei im Wesentlichen in Längsrichtung L2 der Schaumstoff-Sperrschicht-Bahn 62 senkrecht zu den jeweils miteinander zu verbindenden Schenkeln 72, 74 bzw. 76, 78 aufzubringen. Dadurch werden die miteinander zu verbindenden Streifen 56 flächig aneinander gedrückt, um eine zuverlässige und möglichst vollständige Verbindung zu erreichen. Hierfür können bereits geringe Drücke ausreichen. Diese können z. B. durch eine mittels der Fördervorrichtungen der Schaumstoff-Sperrschicht-Bahn 62 erzeugte Fördergeschwindigkeit erzeugt werden. Wird ein in Förderrichtung F stromabwärts gelegener Bereich der Schaumstoff-Sperrschicht-Bahn 62 langsamer gefördert als ein stromaufwärts gelegener Bereich, wird die Bahn 62 dadurch geringfügig gestaucht, wodurch ein entsprechender Druck erzeugt werden kann.

Alternativ oder zusätzlich zum Erwärmen der Streifen 56 und Verbinden der Streifen 56 mittels der Schenkel 72, 74, 76, 78 der ersten und der zweiten Sperrschicht 34, 46 können zusätzliche Verbindungsmittel vorgesehen sein, um die Streifen 56 in Längsrichtung L2 miteinander zu verbinden. Beispielsweise kann eine Klebeschicht, vorzugsweise ein Klebeband auf die Oberseite 64 und/oder die Unterseite 66 und/oder eine oder beide der Seitenflanken 68, 70 der Schaumstoff-Sperrschicht-Bahn 62 aufgebracht werden. Es kann auch ein zusätzlicher Klebstoff zwischen die Streifen 56 eingebracht werden.

Wie zu Fig. 3 beschrieben, erstrecken sich die Mehrzahl von ersten Schnitten 48 und die Mehrzahl von zweiten Schnitten 52 nur teilweise zwischen der Oberseite 50 und der Unterseite 54 der kaschierten Schaumstoffbahn 38. Zum Schutz der ersten und der zweiten Sperrschicht 34, 46 ist es weiter bevorzugt, dass die Mehrzahl von ersten Schnitten 48 und die Mehrzahl von zweiten Schnitten 52 die erste Schaumstoffbahn 24 nicht vollständig durchtrennen, sodass ein Steg aus Schaumstoff zwischen dem jeweiligen Schnitt und der nächstliegenden Oberseite bzw. Unterseite der ersten Schaumstoffbahn 24 verbleibt. Solche Schaumstoffstege 84 sind in Fig. 4 gut zu erkennen. Die Schaumstoffstege 84 verbinden die aneinander angrenzenden Streifen 56 vor und nach dem Umklappen derselben. Wie aus Fig. 4 ersichtlich ist, ist es jedoch möglich, dass eine Wasserdampfdiffusion in Längsrichtung L zwischen zwei aneinander angrenzenden Streifen 56 und später somit zwischen aneinander angrenzenden Dichtbandabschnitte 20 durch diese Schaumstoffstege 84 hindurch und um die jeweilige Sperrschicht 34, 46 herum erfolgt. Die Schaumstoffstege 84 sind daher möglichst klein auszubilden. Vorzugsweise weist ein Schaumstoffsteg 84 eine Höhe von maximal 10 mm, mehr bevorzugt von maximal 5 mm und noch mehr bevorzugt von maximal 1 bis 2 mm auf. Die Angabe der Höhe der Schaumstoffstege 84 bezieht sich dabei auf einen unverformten Zustand der Stege 84, also vorzugsweise im entspannten Zustand der ersten Schaumstoffbahn 24 und vor dem Umklappen der Streifen 56.

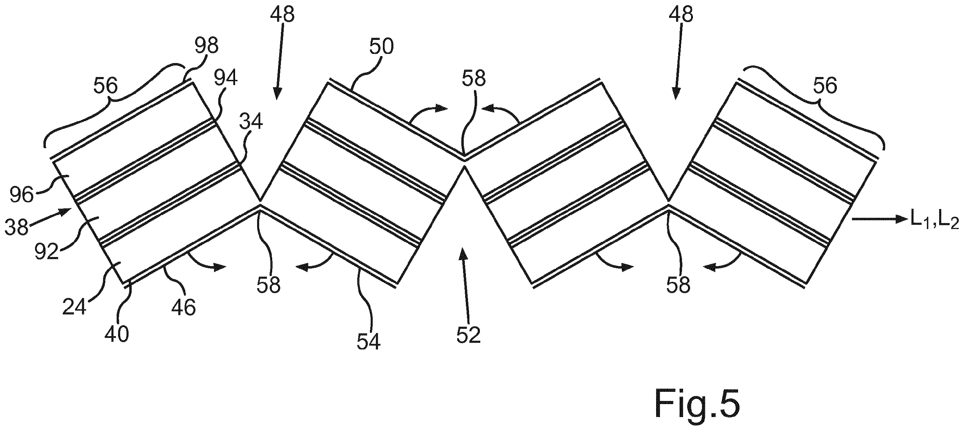

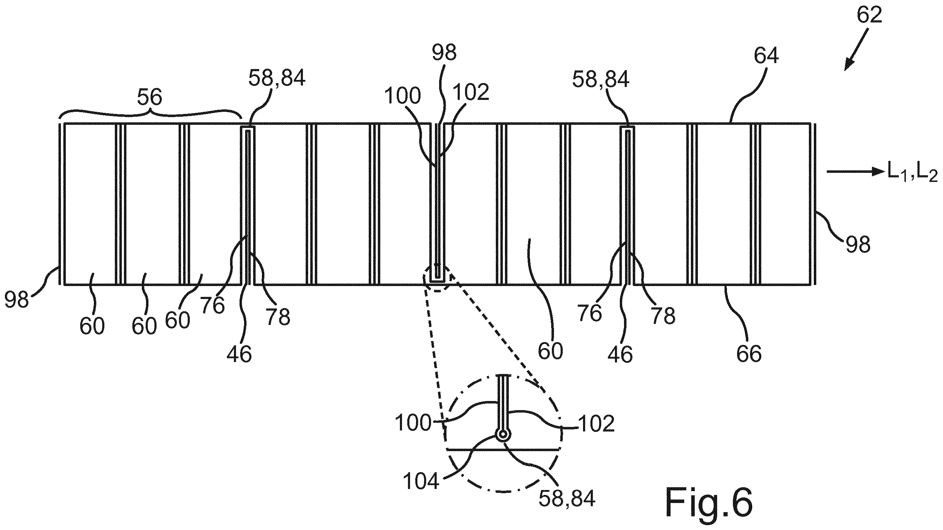

Anhand der Figuren 5 und 6 ist ein weiteres Ausführungsbeispiel beschrieben, bei dem die Schaumstoff-Sperrschicht-Bahn 62 aus einer mehrlagigen kaschierten Schaumstoffbahn 38 gebildet wird. Dabei wird im Wesentlichen nur auf die Unterschiede zu den bisherigen Ausführungen bezüglich einer einlagigen kaschierten Schaumstoffbahn 38 eingegangen. Die übrigen Ausführungen und Merkmale sowohl bezüglich der Erzeugnisse als auch der Verfahrensschritte sind analog auf dieses Ausführungsbeispiel anzuwenden.

Zunächst wird die erste Schaumstoffbahn 24 bereitgestellt und die erste Sperrschicht 34 wird auf deren erste Fläche 36, hier wieder die Oberseite 6 aufgebracht. Die zweite Sperrschicht 46 wird vorzugsweise auf die zweite Fläche 40, hier wieder die Unterseite 8 der ersten Schaumstoffbahn 24 aufgebracht. Anschließend folgen die Schritte des Bereitstellens mindestens einer weiteren Schaumstoffbahn aus weichem Schaumstoff, des Anordnens der mindestens einen weiteren Schaumstoffbahn derart, dass sich jeweils eine erste Fläche und eine zweite Fläche zweier aneinander angrenzender Schaumstoffbahnen gegenüberliegen, und des Anordnens mindestens einer Sperrschicht zwischen jeweils zwei aneinander angrenzenden Schaumstoffbahnen. Vorzugsweise ist zumindest eine von zwei einander zugewandten ersten und zweiten Flächen zweier aneinander angrenzender Schaumstoffbahnen mit einer Sperrschicht versehen, bevor die Schaumstoffbahnen übereinander angeordnet werden.

Bezogen auf das dargestellte Ausführungsbeispiel bedeutet dies, dass zunächst eine zweite Schaumstoffbahn 92 bereitgestellt und derart zugeführt wird, dass ihre Unterseite der Oberseite der ersten Schaumstoffbahn 24 zugewandt ist. Die Unterseite der zweiten Schaumstoffbahn 92 wird auf die erste Sperrschicht 34 aufgebracht und vorzugsweise mittels der ersten Sperrschicht 34 mit der ersten Schaumstoffbahn 24 verbunden. Die Verbindung erfolgt derart, wie es bezüglich der Verbindung der ersten und der zweiten Sperrschicht 34, 46 mit der ersten Schaumstoffbahn 24 beschrieben ist.

Weiter bevorzugt wird eine dritte Sperrschicht 94 auf eine erste Fläche der zweiten Schaumstoffbahn 92 aufgebracht, wie auch die erste und die zweite Sperrschicht 34, 46 auf die erste Schaumstoffbahn 24 aufgebracht werden. Die erste Fläche der zweiten Schaumstoffbahn 92 entspricht in diesem Beispiel einer Oberseite der zweiten Schaumstoffbahn 92, während eine zweite Fläche der zweiten Schaumstoffbahn 92 einer Unterseite derselben entspricht.

Analog zur zweiten Schaumstoffbahn 92 kann auf die dritte Sperrschicht 94 weiterhin eine dritte Schaumstoffbahn 96 aufgebracht werden. Die dritte Schaumstoffbahn 96 weist eine erste Fläche und eine zweite Fläche auf, wobei hier die erste Fläche einer Oberseite und die zweite Fläche einer Unterseite der dritten Schaumstoffbahn 96 entsprechen. Die zweite Fläche der dritten Schaumstoffbahn 96 steht flächig mit der dritten Sperrschicht 94 in Kontakt.

Der Stapel aus abwechselnd übereinander angeordneten Schaumstoffbahnen und Sperrschichten bildet eine mehrlagige kaschierte Schaumstoffbahn 38. Das Aufbringen weiterer Schaumstoffbahnen und Sperrschichten kann beliebig oft wiederholt werden, um eine beliebig große mehrlagige kaschierte Schaumstoffbahn 38 zu erzeugen, die mindestens zwei Schaumstoffbahnen 24, 92 umfasst. Nach dem Erzeugen des mehrlagigen kaschierte Schaumstoffbahn 38 wird das Verfahren analog zum Verfahren nach Fig. 3 fortgeführt.

Es bevorzugt, dass auf zumindest eine von den übrigen Schaumstoffbahnen abgewandte erste oder zweite Fläche einer außenliegenden Schaumstoffbahn eine Sperrschicht aufgebracht wird. Die kaschierte Schaumstoffbahn 38 weist dann auf ihrer Oberseite 50 und/oder Unterseite 54 eine Sperrschicht 46, 98 auf. Im Ausführungsbeispiel wird hierzu auf die erste Fläche der dritten Schaumstoffbahn 96 eine vierte Sperrschicht 98 aufgebracht und/oder auf die zweite Fläche 40 der ersten Schaumstoffbahn 24 die zweite Sperrschicht 46 aufgebracht.

Jede Sperrschicht 34, 46, 94, 98 ist mit der angrenzenden Schaumstoffbahn bzw. den angrenzenden Schaumstoffbahnen 24, 92, 96 verbunden. Bezüglich der Materialien der Sperrschichten und des Verbindens einer Sperrschicht mit einer Schaumstoffbahn wird auf die Ausführungen zur ersten und zweiten Sperrschicht 24, 46 und zum Verbinden derselben mit der ersten Schaumstoffbahn 24 verwiesen.

Im Vergleich zu einer einlagigen kaschierten Schaumstoffbahn 38, wie zuvor beschrieben, tritt bei der mehrlagigen kaschierten Schaumstoffbahn 38 die vierte Sperrschicht 98 an die Stelle der ersten Sperrschicht 34. Ein Verbindungsbereich 58 im Bereich der Oberseite 50 der kaschierten Schaumstoffbahn 38 umfasst nunmehr die vierte Sperrschicht 98 und/oder einen Schaumstoffsteg 84, der in der dritten Schaumstoffbahn 96 ausgebildet ist. Ein Verbindungsbereich 58 im Bereich der Unterseite 54 der kaschierten Schaumstoffbahn 38 umfasst auch hier die zweite Sperrschicht 46 und/oder einen Schaumstoffsteg 84, der in der ersten Schaumstoffbahn 24 ausgebildet ist. Das Prinzip ist auf mehrlagige kaschierte Schaumstoffbahnen 38 beliebiger Größe übertragbar.

Wie in Fig. 5 zu sehen ist, wird eine Mehrzahl von ersten Schnitten 48 in die Oberseite 50 der mehrlagigen kaschierten Schaumstoffbahn 38 und eine Mehrzahl von zweiten Schnitten 52 in die Unterseite 54 der mehrlagigen kaschierten Schaumstoffbahn 38 eingebracht. Die Mehrzahl von ersten Schnitten 48 wird ausgehend von der Oberseite 50 der kaschierten Schaumstoffbahn 38 eingebracht, sodass sie zumindest die dritte Schaumstoffbahn 96, die dritte Sperrschicht 94, die zweite Schaumstoffbahn 92, die erste Sperrschicht 34 sowie, falls vorhanden, die vierte Sperrschicht 98 vollständig durchtrennt. Die Mehrzahl von ersten Schnitten 48 durchtrennt die erste Schaumstoffbahn 24 zumindest teilweise (bis auf einen Schaumstoffsteg 84) oder auch vollständig. Die Mehrzahl von zweiten Schnitten 52 wird ausgehend von der Unterseite 54 der mehrlagigen kaschierten Schaumstoffbahn 38 eingebracht, sodass sie zumindest die erste Schaumstoffbahn 24, die erste Sperrschicht 34, die zweite Schaumstoffbahn 92, die dritte Sperrschicht 96 sowie, falls vorhanden, die zweite Sperrschicht 46 vollständig durchtrennt. Die Mehrzahl von zweiten Schnitten 52 durchtrennt die dritte Schaumstoffbahn 96 zumindest teilweise (bis auf einen Schaumstoffsteg 84) oder auch vollständig. Durch das Einbringen der Mehrzahl von ersten und zweiten Schnitten 48, 52 in Längsrichtung L1 versetzt zu einander werden parallel verlaufende Streifen 56 gebildet, die in Längsrichtung L1 hintereinander angeordnet sind. Zwischen zwei aneinander angrenzenden Streifen 56 verbleibt ein Verbindungsabschnitt 58.

Es ist ersichtlich, dass das Einbringen der Mehrzahl von ersten und zweiten Schnitten 48, 52 auf dieselbe Weise erfolgt, wie in Bezug auf Fig. 3 beschrieben ist.

Das Umklappen der Streifen 56 zur Herstellung einer Schaumstoff-Sperrschicht-Bahn 62 ist in Fig. 5 veranschaulicht und durch Pfeile angedeutet. Die Streifen 56 werden derart im Bereich der Verbindungsabschnitte 58 umgeklappt, dass sich Teilabschnitte der Oberseite 50 der kaschierten Schaumstoffbahn 38, die an einen gemeinsamen Verbindungsabschnitt 58 angrenzen, gegenüberliegen und dass sich Teilabschnitte der Unterseite 54 der kaschierten Schaumstoffbahn 38, die an einen gemeinsamen Verbindungsabschnitt 58 angrenzen, gegenüberliegen. Eine dadurch gebildete Schaumstoff-Sperrschicht-Bahn 62 ist in Fig. 6 dargestellt.

Der Wesentliche Unterschied der Schaumstoff-Sperrschicht-Bahn 62 nach Fig. 6 gegenüber der Schaumstoff-Sperrschicht-Bahn 62 nach Fig. 4 besteht darin, dass jeder Streifen 56 eine Mehrzahl von Schaumstoffstreifen 60 und zusätzliche innenliegende Sperrschichtabschnitte der ersten und dritten Sperrschicht 34, 94 umfasst, die neben den zwischen den Streifen 56 angeordneten Teilabschnitten der zweiten und vierten Sperrschichten 46, 98 angeordnet sind.

Die zweite und die vierte Sperrschicht 46, 98 bilden in diesem Ausführungsbeispiel Sperrschichten, die zwischen zwei aneinander angrenzenden Streifen 56 aufgenommen sind, im Wesentlichen senkrecht zur Unterseite 66 der Schaumstoff-Sperrschicht-Bahn 62 ausgerichtet sind und sich über einen Großteil der Höhe der Schaumstoff-Sperrschicht-Bahn 62 zwischen deren Oberseite 64 und Unterseite 66 erstrecken. Zudem beinhaltet jeder Streifen 56 noch weitere Sperrschichtabschnitte der ersten und dritten Sperrschicht 34, 94. Da die Sperrschichtabschnitte der ersten und dritten Sperrschicht 34, 94 nicht durch Umklappen gefaltet wurden sondern von den ersten und zweiten Schnitten 48, 52 durchtrennt wurden, erstrecken sie sich einlagig innerhalb eines Streifens 56 von der Oberseite 64 zur Unterseite 66 der Schaumstoff-Sperrschicht-Bahn 62.

In Fig. 6 ist besonders gut zu erkennen, dass ein durch Umklappen der Streifen 56 gefalteter Sperrschichtabschnitt 46, 98 zwei Schenkel 76, 78, 100, 102 aufweist, die miteinander verbunden sind. Die Schenkel 76, 78, 100, 102 sind im Bereich des jeweils angrenzenden Verbindungsabschnitts 58 miteinander verbunden. Durch das Umklappen der Streifen 56 entlang der Verbindungsabschnitte 58 werden die Sperrschichtabschnitte 46, 98 im Bereich der jeweils angrenzenden Verbindungsabschnitte 58 gekrümmt. Die zwei Schenkel 76, 78, 100, 102 eines Sperrschichtabschnitts 46, 98 sind dann vorzugsweise durch eine Krümmung 82, 104 des jeweiligen Sperrschichtabschnitts 46, 98 verbunden.

Es ist bevorzugt, dass die Streifen 56 nach dem Umklappen durch Verhaften bzw. Verschmelzen der aneinander angrenzenden Schenkel 74, 76 bzw. 100, 102 der Sperrschichtabschnitte miteinander verbunden werden. Vorzugsweise werden die Streifen 56 dazu vor dem Umklappen, alternativ auch erst nach dem Umklappen erwärmt und optional aneinander gedrückt.

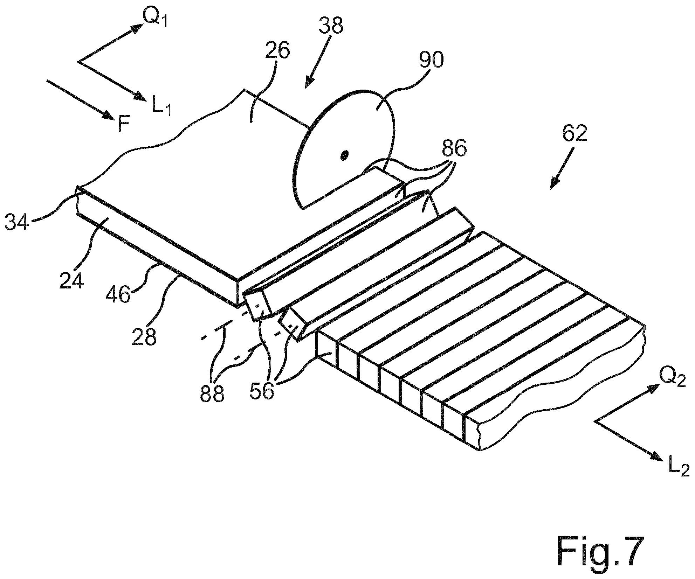

Fig. 7 zeigt einen Teil einer zweiten Ausführungsform eines erfindungsgemäßen Verfahrens. Zunächst wird auch hier gemäß den Ausführungen zu Fig. 2 eine kaschierte Schaumstoffbahn erzeugt, indem zunächst eine erste Schaumstoffbahn 24 bereitgestellt wird und auf diese zumindest eine erste Sperrschicht 34, vorzugsweise auch eine zweite Sperrschicht 46 aufgebracht wird. In der dargestellten Ausführungsform umfasst die kaschierte Schaumstoffbahn 38 die erste Schaumstoffbahn 24, die erste Sperrschicht 34 auf der Oberseite 26 der ersten Schaumstoffbahn 24 und die zweite Sperrschicht 46 auf der Unterseite 28 der ersten Schaumstoffbahn 24. Auch hier kann eine beliebig große mehrlagige Schaumstoffbahn 38 verwendet werden.

Das Verfahren gemäß dieser zweiten Ausführungsform unterscheidet sich nun vom Verfahren nach der ersten Ausführungsform nach Fig. 3 insbesondere darin, dass eine Mehrzahl von Schnitten 86 in die kaschierte Schaumstoffbahn 38 eingebracht wird, die die kaschierte Schaumstoffbahn 38 vollständig durchtrennen. Die Mehrzahl von Schnitten 86 wird in Querrichtung Q1 zur Bildung von in Längsrichtung L1 hintereinander angeordneten Streifen 56 eingebracht. Unabhängig davon wie viele Lagen, also wie viele Schaumstoffbahnen und Sperrschichten die kaschierte Schaumstoffbahn 38 umfasst, durchtrennt die Mehrzahl von Schnitten 86 all diese Lagen. Die auf diese Weise gebildeten Streifen 56 sind somit vollständig voneinander getrennt. Es sind keine Verbindungsabschnitte 58 vorhanden, wie dies bei der ersten Ausführungsform der Fall ist.

Nach dem Einbringen der Mehrzahl von Schnitten 86 wird jeder Streifen 56 um eine Kippachse 88 umgeklappt, vorzugsweise um 90 Grad. Die Streifen 56 werden derart umgeklappt, dass Teilabschnitte der ersten Fläche 36 und Teilabschnitte der zweiten Fläche 40 der ersten Schaumstoffbahn 24 bzw. Teilabschnitte der Oberseite 50 und Teilabschnitte der Unterseite 54 der kaschierten Schaumstoffbahn 38 im Inneren der Schaumstoff-Sperrschicht-Bahn 62 angeordnet werden. Die Schnittflächen der Mehrzahl von ersten Schnitten 48 bilden die Oberseite 64 der Schaumstoff-Sperrschicht-Bahn 62 und die Schnittflächen der Mehrzahl von zweiten Schnitten 52 bilden die Unterseite 66 der Schaumstoff-Sperrschicht-Bahn 62.

Die Streifen 56 können alle in dieselbe Richtung, beispielsweise in oder entgegen der Förderrichtung F um ihre jeweilige Kippachse 88 umgeklappt werden. In der Schaumstoff-Sperrschicht-Bahn 62 liegen sich dann jeweils ein Teilabschnitt der Oberseite 50 der kaschierten Schaumstoffbahn 38 und ein Teilabschnitt der Unterseite 54 der kaschierten Schaumstoffbahn 38 gegenüber. Die Streifen 56 können aber auch abwechselnd in entgegengesetzte Richtungen umgeklappt werden, beispielsweise also ein Streifen 56 in Förderrichtung F, der nächste Streifen 56 entgegen der Förderrichtung F und der übernächste Streifen 56 wieder in Förderrichtung F. Dann liegen sich in der Schaumstoff-Sperrschicht-Bahn 62 jeweils zwei Teilabschnitte der Oberseite 50 der kaschierten Schaumstoffbahn 38 gegenüber und zwei Teilabschnitte der Unterseite 54 der kaschierten Schaumstoffbahn 38 gegenüber.

Die Kippachse 88 erstreckt sich parallel zur Querrichtung Q1 bzw. Q2. Die Mehrzahl von Schnitten 86 wird durch geeignete Mittel zum Einbringen von Einschnitten eingebracht. Beispielsweise können diese Mittel zum Einbringen von Einschnitten durch Messer, Sägen, wie beispielsweise die dargestellte Kreissäge 90, oder andere dem Fachmann bekannte Vorrichtungen gebildet sein.

Da die einzelnen Streifen 56 nicht miteinander verbunden sind, werden die Streifen 56 in der Schaumstoff-Sperrschicht-Bahn 62 nachfolgend miteinander verbunden. Das Verbinden der aneinander angrenzenden Streifen 56 kann durch Erwärmen und Aufbringen von Druck erfolgen oder durch zusätzliche Verbindungsmittel, wie z. B. Klebstoffe bewirkt werden. Verschiedene Möglichkeiten zum Verbinden von Sperrschichten mit Schaumstoffbahnen und zum Verbinden von aneinander angrenzenden Streifen 56 wurden bereits beschrieben und sich auch zum Herstellen der hier erforderlichen Verbindung geeignet. Beispielsweise ist es hier analog zu den obigen Ausführungen möglich, die kaschierte Schaumstoffbahn 38 oder die bereits geschnittenen Streifen 56 vor dem Umklappen zu erwärmen, sodass die Sperrschichten 34, 66 auf eine Schmelztemperatur bzw. ihren Klebepunkt erwärmt werden und die Streifen 56 nach dem Umklappen mittels der erwärmten Sperrschichtabschnitte, die einander in der Schaumstoff-Sperrschicht-Bahn 62 gegenüberliegen, verbunden werden. Zusätzlich oder alternativ kann eine Klebeschicht auf die Oberseite 64 und/oder die Unterseite 66 und/oder einer oder beiden der Seitenflanken 68, 70 der Schaumstoff-Sperrschicht-Bahn 62 aufgebracht werden, um die Streifen 56 auf diese Weise in Längsrichtung L2 miteinander zu verbinden. Schließlich ist es zusätzlich oder alternativ auch möglich, einen Klebstoff zwischen die Streifen 56 einzubringen.

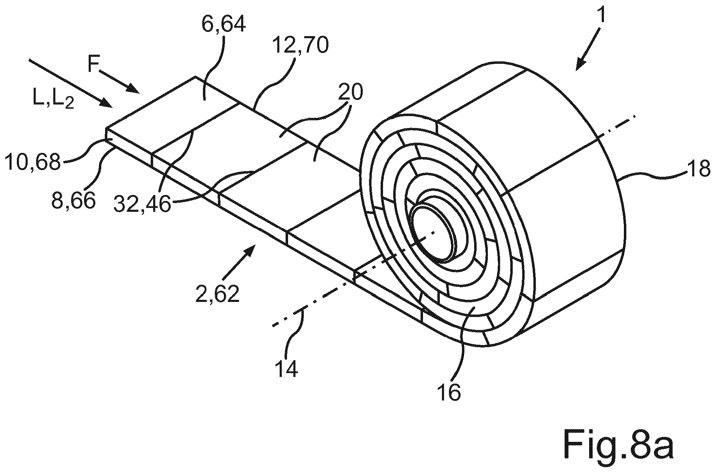

Aus einer Schaumstoff-Sperrschicht-Bahn 62, die entsprechend einer der vorangehend beschrieben Möglichkeiten gebildet wurde, wird schließlich mindestens eine Dichtbandrolle 1 hergestellt. Dazu stehen im Wesentlichen drei alternative Verfahren zur Verfügung, die in Bezug auf die Figuren 8a bis 8c detaillierter beschrieben sind. Die Verfahren nach Fig. 8a bis 8c sind auf alle der zuvor beschriebenen Ausführungsformen des erfindungsgemäßen Herstellverfahrens sowie auf alle Ausführungsformen der durch diese gebildeten Schaumstoff-Sperrschicht-Bahn 62 anwendbar.

In der Ausführungsform nach Fig. 8a entspricht die Schaumstoff-Sperrschicht-Bahn 62 bereits den Anforderungen an das herzustellende Dichtband 2, insbesondere hinsichtlich seiner Breite und der Anordnung innenliegender Sperrschichten 34, 46. Die Schaumstoff-Sperrschicht-Bahn 62 bildet also bereits ein Dichtband 2. Entsprechend bilden die Oberseite 64, Unterseite 66 und die Seitenflanken 68, 70 der Schaumstoff-Sperrschicht-Bahn 62 die Oberseite 6, Unterseite 8 und die Seitenflanken 10, 12 des Dichtbands 2. Das in Förderrichtung F transportierte und durch die Schaumstoff-Sperrschicht-Bahn 62 gebildete Dichtband 2 wird unmittelbar zu einer Dichtbandrolle 1 aufgewickelt. Das Dichtband 2 wird um eine Drehachse 14 zur Dichtbandrolle 1 aufgewickelt. Es ist bevorzugt, dass sich die Drehachse quer zur Längsrichtung L und parallel zur Unterseite 8 des Dichtbands 2 erstreckt. Das Dichtband 2 wird dabei derart aufgewickelt, dass die Oberseite 6 einer Windung an der Unterseite 8 einer angrenzenden Windung der Dichtbandrolle 1 anliegt und die Seitenflanken 10, 12 des Dichtbands 2 Stirnflächen 16, 18 der Dichtbandrolle 1 bilden. Die Drehachse 14 kann sich aber auch in eine andere Richtung erstrecken, insbesondere auch in eine Richtung quer zur Längsrichtung L und senkrecht zur Unterseite 8 des Dichtbands 2.

Das Dichtband 2 weist eine Mehrzahl von Dichtbandabschnitten 20 auf, die durch die Streifen 56 der Schaumstoff-Sperrschicht-Bahn 62 gebildet werden. Die Mehrzahl von Dichtbandabschnitten 20 ist in einem abgewickelten Zustand des Dichtbands 2 in Längsrichtung L hintereinander angeordnet, wobei zwischen jeweils zwei aneinander angrenzenden Dichtbandabschnitten 20 eine Sperrschicht 34, 46 angeordnet ist. Die Sperrschichten 34, 46 erstrecken sich über mindestens 50% der Höhe des Dichtbands zwischen der Oberseite 6 und der Unterseite 8.

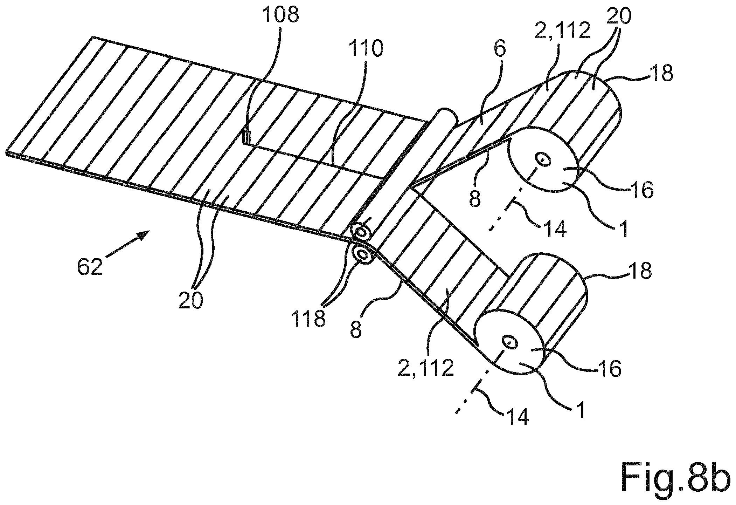

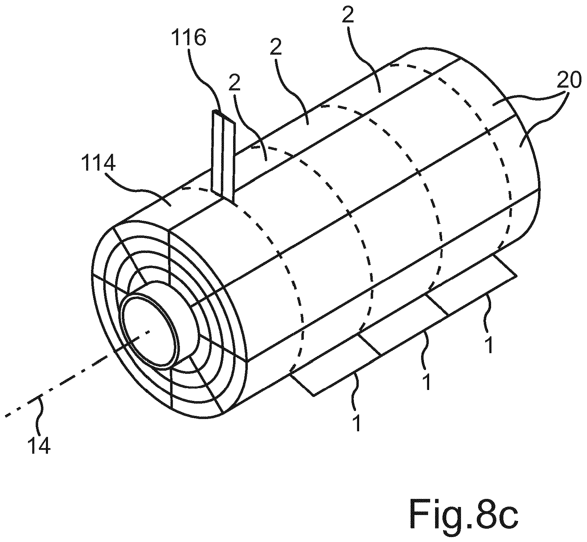

Ist die Schaumstoff-Sperrschicht-Bahn 62 breiter als das herzustellende Dichtband 2, kommen die Verfahren nach Fig. 8b und 8c in Frage.

Bei der Ausführungsform nach Fig. 8b wird die Schaumstoff-Sperrschicht-Bahn 62 mittels eines oder mehrerer Messer 108 oder Sägen in Längsrichtung L2 durchtrennt. Hierdurch wird mindestens ein Schnitt 110 in die Schaumstoff-Sperrschicht-Bahn 62 eingefügt, wodurch mindestens zwei Schaumstoff-Sperrschicht-Streifen 112 erzeugt werden. Jeder dieser Schaumstoff-Sperrschicht-Streifen 112 entspricht einem Dichtband 2. Jeder Schaumstoff-Sperrschicht-Streifen 112 bzw. jedes Dichtband 2 wird dann um eine Drehachse 14 zu einer Dichtbandrolle 1 aufgewickelt. Auf diese Weise kann der nachfolgend in Fig. 8c dargestellte Schritt des Zerteilens einer Zwischenrolle 114 entfallen. Vorzugsweise erstreckt sich die Drehachse 14 quer zur Längsrichtung L und parallel zur Unterseite 8 des Dichtbands 2 bzw. der Schaumstoff-Sperrschicht-Bahn 62. Das Dichtband 2 wird dabei derart aufgewickelt, dass die Oberseite 6 einer Windung an der Unterseite 8 einer angrenzenden Windung der Dichtbandrolle 1 anliegt und die Seitenflanken 10, 12 des Dichtbands 2 Stirnflächen 16, 18 der Dichtbandrolle 1 bilden. Die Drehachse 14 kann sich aber auch in eine andere Richtung erstrecken

Gemäß der Ausführungsform nach Fig. 8c wird die Schaumstoff-Sperrschicht-Bahn 62 zunächst zu einer Zwischenrolle 114 aufgewickelt. Die Schaumstoff-Sperrschicht-Bahn 62 wird um eine Drehachse 14 zur Zwischenrolle 114 aufgewickelt. Auch in diesem Fall erstreckt sich die Drehachse 14 vorzugsweise senkrecht zur Längsrichtung L2 der Schaumstoff-Sperrschicht-Bahn 62 und parallel zu deren Unterseite 66. Die Schaumstoff-Sperrschicht-Bahn 62 wird derart zur Zwischenrolle 114 aufgewickelt, dass die Oberseite 64 einer Windung an der Unterseite 66 einer angrenzenden Windung der Zwischenrolle 114 anliegt und die Seitenflanken 68, 70 der Schaumstoff-Sperrschicht-Bahn 62 Stirnflächen der Zwischenrolle 114 bilden. Die Drehachse 14 kann sich aber auch hier in eine beliebige andere Richtung erstrecken.

Die Zwischenrolle 114 wird dann an einer oder an mehreren Stellen in axialer Richtung durchtrennt, um eine Mehrzahl von Dichtbandrollen 1 zu erzeugen, die weniger breit sind als die Zwischenrolle 114. Vorzugsweise wird das Durchtrennen der Zwischenrolle 114 mittels einer oder mehrerer paralleler Sägen 116 durchgeführt. In Fig. 8c ist nur eine Säge 116 dargestellt und weitere parallele Schnitte zum Durchtrennen der Zwischenrolle 114 sind gestrichelt angedeutet. Anstelle der Säge können auch andere geeignete Verfahren oder Vorrichtungen zum Durchtrennen verwendet werden (z.B. Messer, beheizte Drähte, Laserschneiden, Wasserstrahlschneiden). Jeder der durch die Schnitte gebildeten Streifen der zur Zwischenrolle 114 aufgewickelten Schaumstoff-Sperrschicht-Bahn 62 bildet ein Dichtband 2.

In allen Ausführungsformen werden die Schaumstoff-Sperrschicht-Bahn 62 bzw. die Schaumstoff-Sperrschicht-Streifen 112 vor dem Aufwickeln zu einer Dichtbandrolle 1 komprimiert. Dies kann entweder durch vorgelagerte Kompressionswalzen geschehen oder durch einen während des Aufwickelns ausgeübten Druck auf die Schaumstoff-Sperrschicht-Bahn 62 bzw. die Schaumstoff-Sperrschicht-Streifen 112. Entsprechende Kompressionswalzen 118 sind beispielsweise in Fig. 8b dargestellt.

Bei allen drei Ausführungsbeispielen nach den Fig. 8a bis 8c kann auf die Schaumstoff-Sperrschicht-Bahn 62 eine Klebeschicht auf eine quer zu den Sperrschichten 6, 10 angeordneten Fläche, vorzugsweise der Unterseite 66 der Schaumstoff-Sperrschicht-Bahn 62 aufgebracht werden. Die Klebeschicht dient dem Verbinden des zur Dichtbandrolle 1 aufgewickelten Dichtbands 2 mit einem Fenster- oder Türrahmen und ist in Fig. 1 durch die Klebeschicht 15 veranschaulicht. Im Ausführungsbeispiel nach Fig. 8b kann das Aufbringen der Klebeschicht auch erst nach dem Bilden der Schaumstoff-Sperrschicht-Streifen 112 auf selbige erfolgen. Die Klebeschicht ist vorzugsweise als ein einseitig mit einer Abziehfolie kaschiertes doppelseitiges Klebeband ausgebildet. Das Klebeband ist wiederum auf einer Spule oder Rolle gelagert und wird von dieser abgezogen. Vorzugsweise erfolgt das Aufbringen des Klebebands auf die Schaumstoff-Sperrschicht-Bahn 62 gleichzeitig mit dem Aufwickeln der Schaumstoff-Sperrschicht-Bahn 62 zur Zwischenrolle 112 oder zur Dichtbandrolle 1, wobei die Kompressionswalzen 118 den Druck zur Verbindung von Klebeband und Schaumstoff-Sperrschicht-Bahn 62 bzw. Schaumstoff-Sperrschicht-Streifen 112 erzeugen.

## Patentansprüche

1. Verfahren zum Herstellen einer Dichtbandrolle (1) mit einer Mehrzahl innenliegender Sperrschichten (34, 46), von denen sich jede über mindestens 50% der Breite der Dichtbandrolle (1) zwischen einander gegenüberliegenden Stirnflächen (16, 18) der Dichtbandrolle (1) erstreckt, mit den folgenden Schritten:
a) Bereitstellen einer ersten Schaumstoffbahn (24) aus weichem Schaumstoff mit einer Oberseite (6), einer Unterseite (8) und zwei die Oberseite (6) und die Unterseite (8) verbindenden Seitenflanken (10, 12), wobei eine Längsrichtung (L1) parallel zur Unterseite (8) und parallel zu den Seitenflanken (10, 12) definiert ist und eine Querrichtung (Q1) parallel zur Unterseite (8) und senkrecht zur Längsrichtung (L1) definiert ist;
b) Aufbringen einer ersten Sperrschicht (34) auf eine erste Fläche (36) der ersten Schaumstoffbahn (24) zur Bildung einer kaschierten Schaumstoffbahn (38), wobei die erste Fläche (36) der Oberseite (6) oder Unterseite (8) der ersten Schaumstoffbahn (24) entspricht und eine zweite Fläche (40) der jeweils anderen aus Oberseite (6) und Unterseite (8) der ersten Schaumstoffbahn (24) entspricht;
c) Einbringen einer Mehrzahl von ersten Schnitten (48) in eine Oberseite (50) der kaschierten Schaumstoffbahn (38) in Querrichtung (Q1) und Einbringen einer Mehrzahl von zweiten Schnitten (52) in eine Unterseite (54) der kaschierten Schaumstoffbahn (38) in Querrichtung (Q1) und jeweils in Längsrichtung (L1) versetzt zu einem ersten Schnitt (48) zur Bildung von in Längsrichtung (L1) hintereinander angeordneten Streifen (56), wobei zwischen zwei aneinander angrenzenden Streifen (56) ein Verbindungsabschnitt (58) verbleibt;
d) Umklappen der Streifen (56) im Bereich der Verbindungsabschnitte (58) zur Herstellung einer Schaumstoff-Sperrschicht-Bahn (62) derart, dass sich Teilabschnitte der Oberseite (50) der kaschierten Schaumstoffbahn (38), die an einen gemeinsamen Verbindungsabschnitt (58) angrenzen, gegenüberliegen und sich Teilabschnitte der Unterseite (54) der kaschierten Schaumstoffbahn (38), die an einen gemeinsamen Verbindungsabschnitt (58) angrenzen, gegenüberliegen; und
e) Bilden einer Dichtbandrolle (1) durch
(i) Aufwickeln der Schaumstoff-Sperrschicht-Bahn (62) um eine Drehachse (14) zu einer Dichtbandrolle (1); oder
(ii) Aufwickeln der Schaumstoff-Sperrschicht-Bahn (62) um eine Drehachse (14) zu einer Zwischenrolle (114) und Durchtrennen der Zwischenrolle (114) an einer oder an mehreren Stellen in einer axialen Richtung, um eine Mehrzahl von Dichtbandrollen (1) zu erzeugen, die weniger breit sind als die Zwischenrolle (114); oder
(iii) Einbringen mindestens eines Schnitts (110) in die Schaumstoff-Sperrschicht-Bahn (62) in einer Längsrichtung (L2) der Schaumstoff-Sperrschicht-Bahn (62) zur Bildung von Schaumstoff-Sperrschicht-Streifen (112) und Aufwickeln der Schaumstoff-Sperrschicht-Streifen (112) um eine Drehachse (14) zu einzelnen Dichtbandrollen (1).

2. Verfahren nach Anspruch 1, **dadurch gekennzeichnet, dass** Schritt b) weiterhin das Aufbringen einer zweiten Sperrschicht (46) auf die zweite Fläche (40) der ersten Schaumstoffbahn (24) umfasst.

3. Verfahren nach einem der vorangehenden Ansprüche, **dadurch gekennzeichnet, dass**
Schritt a) weiterhin das Bereitstellen mindestens einer weiteren Schaumstoffbahn (92, 96) aus weichem Schaumstoff umfasst; und
Schritt b) zum Bilden einer kaschierten Schaumstoffbahn (38) aus mehreren Lagen weiterhin umfasst:
Anordnen der mindestens einen weiteren Schaumstoffbahn (92, 96) derart, dass sich jeweils eine zweite Fläche und eine erste Fläche zweier aneinander angrenzender Schaumstoffbahnen (24, 92, 96) gegenüberliegen; und
Anordnen mindestens einer Sperrschicht (36, 94, 98) zwischen zwei aneinander angrenzenden Schaumstoffbahnen (24, 92, 96).

4. Verfahren nach Anspruch 3, **gekennzeichnet durch** das Verbinden der ersten Schaumstoffbahn (24) mit der mindestens einen weiteren Schaumstoffbahn (92, 96) an den einander zugewandten ersten und zweiten Flächen.

5. Verfahren nach Anspruch 3 oder 4, **gekennzeichnet durch** das Aufbringen einer Sperrschicht (46, 98) auf zumindest eine von den übrigen Schaumstoffbahnen (24, 92, 96) abgewandte erste oder zweite Fläche einer außenliegenden Schaumstoffbahn (24, 96).

6. Verfahren nach einem der vorangehenden Ansprüche, **dadurch gekennzeichnet, dass** in Längsrichtung (L1) betrachtet abwechselnd ein erster Schnitt (48) und ein zweiter Schnitt (52) in die kaschierte Schaumstoffbahn (38) eingebracht werden.

7. Verfahren nach einem der vorangehenden Ansprüche, **dadurch gekennzeichnet, dass** die Mehrzahl von ersten Schnitten (48) und die Mehrzahl von zweiten Schnitten (52) in einer Längsrichtung (L1) der kaschierten Schaumstoffbahn (38) in gleichmäßigen Abständen zueinander eingebracht werden, um Streifen (56) gleicher Breite zu erzeugen.

8. Verfahren nach Anspruch 2, **dadurch gekennzeichnet, dass** die Mehrzahl von ersten Schnitten (48) die erste Schaumstoffbahn (24) vollständig durchtrennt, sodass die Mehrzahl von Verbindungsabschnitten (58) im Bereich der zweiten Fläche (40) alleine durch die zweite Sperrschicht (46) gebildet wird, und dass die Mehrzahl von zweiten Schnitten (52) die erste Schaumstoffbahn (24) nicht vollständig durchtrennt, sodass die Mehrzahl von Verbindungsabschnitten (58) im Bereich der ersten Fläche (36) einen Schaumstoffsteg (84) umfasst.

9. Verfahren nach Anspruch 1 oder 2, **dadurch gekennzeichnet, dass** die Mehrzahl von ersten Schnitten (48) die erste Schaumstoffbahn (24) nicht vollständig durchtrennt, sodass die Mehrzahl von Verbindungsabschnitten (58) im Bereich der zweiten Fläche (40) einen Schaumstoffsteg (84) umfasst, und dass die Mehrzahl von zweiten Schnitten (52) die erste Schaumstoffbahn (24) vollständig durchtrennt, sodass die Mehrzahl von Verbindungsabschnitten (58) im Bereich der ersten Fläche (36) alleine durch die erste Sperrschicht (34) gebildet wird.

10. Verfahren nach Anspruch 1 oder 2, **dadurch gekennzeichnet, dass** die Mehrzahl von ersten Schnitten (48) und die Mehrzahl von zweiten Schnitten (52) die erste Schaumstoffbahn (24) nicht vollständig durchtrennen, sodass die Mehrzahl von Verbindungsabschnitten (58) im Bereich der ersten Fläche (36) einen Schaumstoffsteg (84) umfasst und die Mehrzahl von Verbindungsabschnitten (58) im Bereich der zweiten Fläche (40) einen Schaumstoffsteg (84) umfasst.

11. Verfahren nach Anspruch 2, **dadurch gekennzeichnet, dass** die Mehrzahl von ersten Schnitten (48) und die Mehrzahl von zweiten Schnitten (52) die erste Schaumstoffbahn (24) jeweils vollständig durchtrennen, sodass die Mehrzahl von Verbindungsabschnitten (58) im Bereich der ersten Fläche (36) alleine durch die erste Sperrschicht (34) gebildet wird und die Mehrzahl von Verbindungsabschnitten (58) im Bereich der zweiten Fläche (40) alleine durch die zweite Sperrschicht (46) gebildet wird.

12. Verfahren nach einem der vorangehenden Ansprüche, **gekennzeichnet durch** das Verbinden der mit der mit einer Sperrschicht (34, 46) versehenen und einander jeweils gegenüberliegenden Teilabschnitte der ersten bzw. der zweiten Fläche (36, 40) der Streifen (56) nach dem Umklappen.

13. Verfahren zum Herstellen einer Dichtbandrolle (1) mit einer Mehrzahl innenliegender Sperrschichten (34, 46), von denen sich jede über mindestens 50% der Breite der Dichtbandrolle (1) zwischen einander gegenüberliegenden Stirnflächen (16, 18) der Dichtbandrolle (1) erstreckt, mit den folgenden Schritten:
a) Bereitstellen einer ersten Schaumstoffbahn (24) aus weichem Schaumstoff mit einer Oberseite (6), einer Unterseite (8) und zwei die Oberseite (6) und die Unterseite (8) verbindenden Seitenflanken (10, 12), wobei eine Längsrichtung (L1) parallel zur Unterseite (8) und parallel zu den Seitenflanken (10, 12) definiert ist und eine Querrichtung (Q1) parallel zur Unterseite (8) und senkrecht zur Längsrichtung (L1) definiert ist;
b) Aufbringen einer ersten Sperrschicht (34) auf eine erste Fläche (36) der ersten Schaumstoffbahn (24) zur Bildung einer kaschierten Schaumstoffbahn (38), wobei die erste Fläche (36) der Oberseite (6) oder Unterseite (8) der ersten Schaumstoffbahn (24) entspricht und eine zweite Fläche (40) der jeweils anderen aus Oberseite (6) und Unterseite (8) der ersten Schaumstoffbahn (24) entspricht;
c) Einbringen einer Mehrzahl von Schnitten (86), die die kaschierte Schaumstoffbahn (38) vollständig durchtrennen, in die kaschierte Schaumstoffbahn (38) in Querrichtung (Q1) zur Bildung von in Längsrichtung (L1) hintereinander angeordneten Streifen (56);
d) Umklappen jedes Streifens (56) um eine Kippachse (88) zur Herstellung einer Schaumstoff-Sperrschicht-Bahn (62) derart, dass Teilabschnitte der Oberseite (50) der kaschierten Schaumstoffbahn (38) und Teilabschnitte der Unterseite (54) der kaschierten Schaumstoffbahn (38) im Inneren der Schaumstoff-Sperrschicht-Bahn (62) angeordnet sind, wobei sich die Kippachse (88) in Querrichtung (Q1) erstreckt;
e) Bilden einer Dichtbandrolle (1) durch
(i) Aufwickeln der Schaumstoff-Sperrschicht-Bahn (62) um eine Drehachse (14) zu einer Dichtbandrolle (1); oder
(ii) Aufwickeln der Schaumstoff-Sperrschicht-Bahn (62) um eine Drehachse (14) zu einer Zwischenrolle (114) und Durchtrennen der Zwischenrolle (114) an einer oder an mehreren Stellen in einer axialen Richtung, um eine Mehrzahl von Dichtbandrollen (1) zu erzeugen, die weniger breit sind als die Zwischenrolle (114); oder
(iii) Einbringen mindestens eines Schnitts (110) in die Schaumstoff-Sperrschicht-Bahn (62) in einer Längsrichtung (L2) der Schaumstoff-Sperrschicht-Bahn (62) zur Bildung von Schaumstoff-Sperrschicht-Streifen (112) und Aufwickeln der Schaumstoff-Sperrschicht-Streifen (112) um eine Drehachse (14) zu einzelnen Dichtbandrollen (1).

14. Verfahren nach Anspruch 13, **dadurch gekennzeichnet, dass** Schritt b) weiterhin das Aufbringen einer zweiten Sperrschicht (46) auf die zweite Fläche (40) der ersten Schaumstoffbahn (24) umfasst, wobei die Mehrzahl von Schnitten (86) auch die zweite Sperrschicht (46) vollständig durchtrennt.

15. Verfahren nach Anspruch 13 oder 14, **gekennzeichnet durch** das Verbinden der aneinander angrenzenden Streifen (56) der Schaumstoff-Sperrschicht-Bahn (62) zwischen Schritt d) und e).

## Claims

1. Method for producing a roll of sealing tape (1) having a plurality of internal barrier layers (34, 46), each of which extends over at least 50% of the width of the roll of sealing tape (1) between mutually opposite end faces (16, 18) of the roll of sealing tape (1), said method having the following steps:
a) providing a first foam web (24) of a soft foam that has a top side (6), a bottom side (8) and two side flanks (10, 12) which connect the top side (6) and the bottom side (8), wherein a longitudinal direction (L1) is defined as parallel to the bottom side (8) and parallel to the side flanks (10, 12) and a transverse direction (Q1) is defined as parallel to the bottom side (8) and perpendicular to the longitudinal direction (L1);
b) applying a first barrier layer (34) to a first surface (36) of the first foam web (24) so as to form a laminated foam web (38), wherein the first surface (36) corresponds to the top side (6) or bottom side (8) of the first foam web (24) and a second surface (40) corresponds to the respectively other one of the top side (6) and bottom side (8) of the first foam web (24);
c) introducing a plurality of first cuts (48) into a top side (50) of the laminated foam web (38) in the transverse direction (Q1) and introducing a plurality of second cuts (52) into a bottom side (54) of the laminated foam web (38) in the transverse direction (Q1) and respectively offset in the longitudinal direction (L1) with respect to a first cut (48) so as to form strips (56) arranged one behind another in the longitudinal direction (L1), wherein a connecting portion (58) remains between two strips (56) that adjoin one another;
d) folding over the strips (56) in the region of the connecting portions (58) so as to produce a foam barrier-layer sheet (62), in such a way that sub-portions of the top side (50) of the laminated foam web (38) that adjoin a common connecting portion (58) lie opposite one another and sub-portions of the bottom side (54) of the laminated foam web (38) that adjoin a common connecting portion (58) lie opposite one another; and
e) forming a roll of sealing tape (1) by
(i) winding up the foam barrier-layer sheet (62) around an axis of rotation (14) so as to form a roll of sealing tape (1); or
(ii) winding up the foam barrier-layer sheet (62) around an axis of rotation (14) so as to form an intermediate roll (114) and severing the intermediate roll (114) at one or more points in an axial direction, in order to create a plurality of rolls of sealing tape (1) that are less wide than the intermediate roll (114); or
(iii) introducing at least one cut (110) into the foam barrier-layer sheet (62) in a longitudinal direction (L2) of the foam barrier-layer sheet (62) so as to form foam barrier-layer strips (112), and winding up the foam barrier-layer strips (112) around an axis of rotation (14) so as to form individual rolls of sealing tape (1).

2. Method according to Claim 1, **characterized in that** step b) also comprises applying a second barrier layer (46) to the second surface (40) of the first foam web (24).

3. Method according to one of the preceding claims, **characterized in that**
step a) also comprises providing at least one further foam web (92, 96) of a soft foam; and,
for the purpose of forming a laminated foam web (38) composed of a plurality of layers, step b) also comprises:
arranging the at least one further foam web (92, 96) in such a way that respectively a second surface and a first surface of two foam webs (24, 92, 96) that are adjacent to one another lie opposite each another; and
arranging at least one barrier layer (36, 94, 98) between two foam webs (24, 92, 96) that lie adjacent to one another.

4. Method according to Claim 3, **characterized by** connecting the first foam web (24) to the at least one further foam web (92, 96) at the first and second surfaces which face one another.

5. Method according to Claim 3 or 4, **characterized by** applying a barrier layer (46, 98) to at least one first or second surface of an external foam web (24, 96) that faces away from the rest of the foam webs (24, 92, 96).

6. Method according to one of the preceding claims, **characterized in that** a first cut (48) and a second cut (52) are introduced into the laminated foam web (38) in an alternating manner as viewed in the longitudinal direction (L1).

7. Method according to one of the preceding claims, **characterized in that** the plurality of first cuts (48) and the plurality of second cuts (52) are introduced at uniform intervals with respect to one another in a longitudinal direction (L1) of the laminated foam web (38), in order to create strips (56) of equal width.

8. Method according to Claim 2, **characterized in that** the plurality of first cuts (48) completely severs the first foam web (24) such that the plurality of connecting portions (58) is formed solely by the second barrier layer (46) in the region of the second surface (40), and **in that** the plurality of second cuts (52) does not completely sever the first foam web (24) such that the plurality of connecting portions (58) comprises a foam strip (84) in the region of the first surface (36).

9. Method according to Claim 1 or 2, **characterized in that** the plurality of first cuts (48) does not completely sever the first foam web (24) such that the plurality of connecting portions (58) comprises a foam strip (84) in the region of the second surface (40), and **in that** the plurality of second cuts (52) completely severs the first foam web (24) such that the plurality of connecting portions (58) is formed solely by the first barrier layer (34) in the region of the first surface (36).

10. Method according to Claim 1 or 2, **characterized in that** the plurality of first cuts (48) and the plurality of second cuts (52) do not completely sever the first foam web (24) such that the plurality of connecting portions (58) comprises a foam strip (84) in the region of the first surface (36) and the plurality of connecting portions (58) comprises a foam strip (84) in the region of the second surface (40) .

11. Method according to Claim 2, **characterized in that** the plurality of first cuts (48) and the plurality of second cuts (52) each completely sever the first foam web (24) such that the plurality of connecting portions (58) is formed solely by the first barrier layer (34) in the region of the first surface (36) and the plurality of connecting portions (58) is formed solely by the second barrier layer (46) in the region of the second surface (40).

12. Method according to one of the preceding claims, **characterized by** connecting the mutually respectively opposite sub-portions of the first and/or the second surface (36, 40) of the strips (56), which sub-portions are provided with a barrier layer (34, 46), following the folding-over step.

13. Method for producing a roll of sealing tape (1) having a plurality of internal barrier layers (34, 46), each of which extends over at least 50% of the width of the roll of sealing tape (1) between mutually opposite end faces (16, 18) of the roll of sealing tape (1), said method having the following steps:
a) providing a first foam web (24) of a soft foam that has a top side (6), a bottom side (8) and two side flanks (10, 12) which connect the top side (6) and the bottom side (8), wherein a longitudinal direction (L1) is defined as parallel to the bottom side (8) and parallel to the side flanks (10, 12) and a transverse direction (Q1) is defined as parallel to the bottom side (8) and perpendicular to the longitudinal direction (L1);
b) applying a first barrier layer (34) to a first surface (36) of the first foam web (24) so as to form a laminated foam web (38), wherein the first surface (36) corresponds to the top side (6) or bottom side (8) of the first foam web (24) and a second surface (40) corresponds to the respectively other one of the top side (6) and bottom side (8) of the first foam web (24);
c) introducing a plurality of cuts (86), which completely sever the laminated foam web (38), into the laminated foam web (38) in the transverse direction (Q1) so as to form strips (56) that are arranged one behind another in the longitudinal direction (L1);
d) folding over each strip (56) around a tilting axis (88) so as to produce a foam barrier-layer sheet (62), in such a way that sub-portions of the top side (50) of the laminated foam web (38) and sub-portions of the bottom side (54) of the laminated foam web (38) are arranged in the interior of the foam barrier-layer web (62), wherein the tilting axis (88) extends in the transverse direction (Q1);
e) forming a roll of sealing tape (1) by
(i) winding up the foam barrier-layer sheet (62) around an axis of rotation (14) so as to form a roll of sealing tape (1); or
(ii) winding up the foam barrier-layer sheet (62) around an axis of rotation (14) so as to form an intermediate roll (114) and severing the intermediate roll (114) at one or more points in an axial direction, in order to create a plurality of rolls of sealing tape (1) that are less wide than the intermediate roll (114); or
(iii) introducing at least one cut (110) into the foam barrier-layer sheet (62) in a longitudinal direction (L2) of the foam barrier-layer sheet (62) so as to form foam barrier-layer strips (112), and winding up the foam barrier-layer strips (112) around an axis of rotation (14) so as to form individual rolls of sealing tape (1).

14. Method according to Claim 13, **characterized in that** step b) also comprises applying a second barrier layer (46) to the second surface (40) of the first foam web (24), wherein the plurality of cuts (86) also completely severs the second barrier layer (46).

15. Method according to Claim 13 or 14, **characterized by** connecting the strips (56) of the foam barrier-layer sheet (62) that adjoin one another between step d) and step e).

## Revendications

1. Procédé de fabrication d'un rouleau de ruban d'étanchéité (1) avec une pluralité de couches de verrouillage (34, 46) intérieures, dont chacune s'étend sur au moins 50 % de la largeur du rouleau de ruban d'étanchéité (1) entre des surfaces frontales (16, 18) opposées l'une à l'autre du rouleau de ruban d'étanchéité (1), selon les étapes suivantes :
a) la fourniture d'une première bande de mousse (24) en mousse souple avec un côté supérieur (6), un côté inférieur (8) et deux flancs latéraux (10, 12) reliant le côté supérieur (6) et le côté inférieur (8), dans lequel un sens longitudinal (L1) est défini parallèlement au côté inférieur (8) et parallèlement aux flancs latéraux (10, 12) et un sens transversal (Q1) est défini parallèlement au côté inférieur (8) et perpendiculairement au sens longitudinal (L1),
b) l'application d'une première couche de verrouillage (34) sur une première surface (36) de la première bande de mousse (24) pour la formation d'une bande de mousse (38) contrecollée, dans lequel la première surface (36) correspond au côté supérieur (6) ou au côté inférieur (8) de la première bande de mousse (24) et une seconde surface (40) correspond à respectivement l'autre du côté supérieur (6) et du côté inférieur (8) de la première bande de mousse (24),
c) la réalisation d'une pluralité de premières coupes (48) dans un côté supérieur (50) de la bande de mousse (38) contrecollée dans le sens transversal (Q1) et la réalisation d'une pluralité de secondes coupes (52) dans un côté inférieur (54) de la bande de mousse (38) contrecollée dans le sens transversal (Q1) et respectivement dans le sens longitudinal (L1) en déport d'une première coupe (48) pour la formation de bandes (56) agencées dans le sens longitudinal (L1) les unes derrière les autres, dans lequel une section de liaison (58) reste entre deux bandes (56) contiguës l'une à l'autre,
d) le rabattement des bandes (56) dans la zone des sections de liaison (58) pour la fabrication d'une bande de couche de verrouillage de mousse (62) de telle manière que des sections partielles du côté supérieur (50) de la bande de mousse (38) contrecollée qui sont contiguës à une section de liaison (58) commune se fassent face et des sections partielles du côté inférieur (54) de la bande de mousse (38) contrecollée qui sont contiguës à une section de liaison (58) commune se fassent face et
e) la formation d'un rouleau de ruban d'étanchéité (1) par
(i) l'enroulement de la bande de couche de verrouillage de mousse (62) autour d'un axe de rotation (14) en un rouleau de ruban d'étanchéité (1) ou
(ii) l'enroulement de la bande de couche de verrouillage de mousse (62) autour d'un axe de rotation (14) en un rouleau intermédiaire (114) et la séparation du rouleau intermédiaire (114) à un ou à plusieurs endroits dans un sens axial afin de générer une pluralité de rouleaux de ruban d'étanchéité (1) qui sont moins larges que le rouleau intermédiaire (114) ou
(iii) la réalisation d'au moins une coupe (110) dans la bande de couche de verrouillage de mousse (62) dans un sens longitudinal (L2) de la bande de couche de verrouillage de mousse (62) pour la formation de bandes de couche de verrouillage de mousse (112) et l'enroulement des bandes de couche de verrouillage de mousse (112) autour d'un axe de rotation (14) en rouleaux de ruban d'étanchéité (1) individuels.

2. Procédé selon la revendication 1, **caractérisé en ce que** l'étape b) comporte en outre l'application d'une seconde couche de verrouillage (46) sur la seconde surface (40) de la première bande de mousse (24).

3. Procédé selon l'une des revendications précédentes, **caractérisé en ce que**
l'étape a) comporte en outre la fourniture d'au moins une autre bande de mousse (92, 96) en mousse souple et **en ce que**
l'étape b) pour la formation d'une bande de mousse (38) contrecollée à partir de plusieurs couches comporte en outre :
l'agencement de l'au moins une autre bande de mousse (92, 96) de telle manière que respectivement une seconde surface et une première surface de deux bandes de mousse (24, 92, 96) contiguës l'une à l'autre se fassent face et
l'agencement d'au moins une couche de verrouillage (36, 94, 98) entre deux bandes de mousse (24, 92, 96) contiguës l'une à l'autre.

4. Procédé selon la revendication 3, **caractérisé par** la liaison de la première bande de mousse (24) avec l'au moins une autre bande de mousse (92, 96) au niveau des première et seconde surfaces tournées l'une vers l'autre.

5. Procédé selon la revendication 3 ou 4, **caractérisé par** l'application d'une couche de verrouillage (46, 98) sur au moins une première ou seconde surface, éloignée des bandes de mousse (24, 92, 96) restantes, d'une bande de mousse (24, 96) extérieure.

6. Procédé selon l'une des revendications précédentes, **caractérisé en ce que**, considéré dans le sens longitudinal (L1), une première coupe (48) et une seconde coupe (52) sont réalisées en alternance dans la bande de mousse (38) contrecollée.

7. Procédé selon l'une des revendications précédentes, **caractérisé en ce que** la pluralité de premières coupes (48) et la pluralité de secondes coupes (52) dans un sens longitudinal (L1) de la bande de mousse (38) contrecollée sont réalisées à distances régulières l'une de l'autre afin de générer des bandes (56) de même largeur.

8. Procédé selon la revendication 2, **caractérisé en ce que** la pluralité de premières coupes (48) sépare complètement la première bande de mousse (24) de sorte que la pluralité de sections de liaison (58) soit formée dans la zone de la seconde surface (40) seulement par la seconde couche de verrouillage (46), et que la pluralité de secondes coupes (52) ne sépare pas complètement la première bande de mousse (24) de sorte que la pluralité de sections de liaison (58) comporte dans la zone de la première surface (36) une entretoise de mousse (84).

9. Procédé selon la revendication 1 ou 2, **caractérisé en ce que** la pluralité de premières coupes (48) ne sépare pas complètement la première bande de mousse (24) de sorte que la pluralité de sections de liaison (58) comporte dans la zone de la seconde surface (40) une entretoise de mousse (84) et que la pluralité de secondes coupes (52) sépare complètement la première bande de mousse (24) de sorte que la pluralité de sections de liaison (58) soit formée dans la zone de la première surface (36) seulement par la première couche de verrouillage (34).

10. Procédé selon la revendication 1 ou 2, **caractérisé en ce que** la pluralité de premières coupes (48) et la pluralité de secondes coupes (52) ne séparent pas complètement la première bande de mousse (24) de sorte que la pluralité de sections de liaison (58) comporte dans la zone de la première surface (36) une entretoise de mousse (84) et la pluralité de sections de liaison (58) comporte dans la zone de la seconde surface (40) une entretoise de mousse (84).

11. Procédé selon la revendication 2, **caractérisé en ce que** la pluralité de premières coupes (48) et la pluralité de secondes coupes (52) séparent la première bande de mousse (24) respectivement complètement de sorte que la pluralité de sections de liaison (58) soit formée dans la zone de la première surface (36) seulement par la première couche de verrouillage (34) et la pluralité de sections de liaison (58) soit formée dans la zone de la seconde surface (40) seulement par la seconde couche de verrouillage (46).

12. Procédé selon l'une des revendications précédentes, **caractérisé par** la liaison des sections partielles, pourvues d'une couche de verrouillage (34, 46) et opposées l'une à l'autre respectivement, de la première ou la seconde surface (36, 40) des bandes (56) après le rabattement.

13. Procédé de fabrication d'un rouleau de ruban d'étanchéité (1) avec une pluralité de couches de verrouillage (34, 46) intérieures dont chacune s'étend sur au moins 50 % de la largeur du rouleau de ruban d'étanchéité (1) entre des surfaces frontales (16, 18) opposées l'une à l'autre du rouleau de ruban d'étanchéité (1), selon les étapes suivantes :
a) la fourniture d'une première bande de mousse (24) en mousse souple avec un côté supérieur (6), un côté inférieur (8) et deux flancs latéraux (10, 12) reliant le côté supérieur (6) et le côté inférieur (8), dans lequel un sens longitudinal (L1) est défini parallèlement au côté inférieur (8) et parallèlement aux flancs latéraux (10, 12) et un sens transversal (Q1) est défini parallèlement au côté inférieur (8) et perpendiculairement au sens longitudinal (L1),
b) l'application d'une première couche de verrouillage (34) sur une première surface (36) de la première bande de mousse (24) pour la formation d'une bande de mousse (38) contrecollée, dans lequel la première surface (36) correspond au côté supérieur (6) ou au côté inférieur (8) de la première bande de mousse (24) et une seconde surface (40) correspond à respectivement l'autre du côté supérieur (6) et du côté inférieur (8) de la première bande de mousse (24),
c) la réalisation d'une pluralité de coupes (86) qui séparent complètement la bande de mousse (38) contrecollée dans la bande de mousse (38) contrecollée dans le sens transversal (Q1) pour la formation de bandes (56) agencées dans le sens longitudinal (L1) les unes derrière les autres,
d) le rabattement de chaque bande (56) autour d'un axe de basculement (88) pour la fabrication d'une bande de couche de verrouillage de mousse (62) de telle manière que des sections partielles du côté supérieur (50) de la bande de mousse (38) contrecollée et des sections partielles du côté inférieur (54) de la bande de mousse (38) contrecollée soient agencées à l'intérieur de la bande de couche de verrouillage de mousse (62), dans lequel l'axe de basculement (88) s'étend dans le sens transversal (Q1),
e) la formation d'un rouleau de ruban d'étanchéité (1) par
(i) l'enroulement de la bande de couche de verrouillage de mousse (62) autour d'un axe de rotation (14) en un rouleau de ruban d'étanchéité (1), ou
(ii) l'enroulement de la bande de couche de verrouillage de mousse (62) autour d'un axe de rotation (14) en un rouleau intermédiaire (114) et la séparation du rouleau intermédiaire (114) à un ou à plusieurs endroits dans un sens axial afin de générer une pluralité de rouleaux de ruban d'étanchéité (1) qui sont moins larges que le rouleau intermédiaire (114) ou
(iii) la réalisation d'au moins une coupe (110) dans la bande de couche de verrouillage de mousse (62) dans un sens longitudinal (L2) de la bande de couche de verrouillage de mousse (62) pour la formation de bandes de couche de verrouillage de mousse (112) et l'enroulement des bandes de couche de verrouillage de mousse (112) autour d'un axe de rotation (14) en rouleaux de ruban d'étanchéité (1) individuels.

14. Procédé selon la revendication 13, **caractérisé en ce que** l'étape b) comporte en outre l'application d'une seconde couche de verrouillage (46) sur la seconde surface (40) de la première bande de mousse (24), dans lequel la pluralité de coupes (86) sépare aussi complètement la seconde couche de verrouillage (46).

15. Procédé selon la revendication 13 ou 14, **caractérisé par** la liaison des bandes (56) contiguës les unes aux autres de la bande de couche de verrouillage de mousse (62) entre les étapes d) et e).
